# EUROPEAN PATENT SPECIFICATION

(11) **EP 1 116 610 B1**
(45) Date of publication and mention of the grant of the patent: **28.05.2008**
(21) Application number: 01100075.9
(22) Date of filing: 10.01.2001
(51) Int. Cl.: B60G 21/06, B60G 17/033, F16F 9/06, B60G 17/056, B60G 21/073, B60G 17/015

(54) **Four-wheeled vehicle suspension device**
Aufhängungsvorrichtung für ein vierrädriges Fahrzeug
Dispositif de suspension pour véhicule à quatre roues

(30) Priority: 11.01.2000 JP 2000002597
(43) Date of publication of application: 18.07.2001
(73) Proprietor: Yamaha Hatsudoki Kabushiki Kaisha, Iwata-shi, Shizuoka-ken (JP)
(72) Inventor: Sakai, Kouji c/o Yamaha Hatsudoki Kabushiki Kaisha, Iwata-shi, Shizuoka-ken (JP)
(74) Representative: Grünecker, Kinkeldey, Stockmair & Schwanhäusser Anwaltssozietät

(56) References cited:
- EP-A- 0 695 658
- US-A- 3 032 349
- US-A- 6 010 139
- PATENT ABSTRACTS OF JAPAN vol. 018, no. 319 (M-1623), 17 June 1994 (1994-06-17) -& JP 06 072127 A (YAMAHA MOTOR CO LTD), 15 March 1994 (1994-03-15)

## Description

This invention relates to a suspension system for use in four-wheeled automobiles.

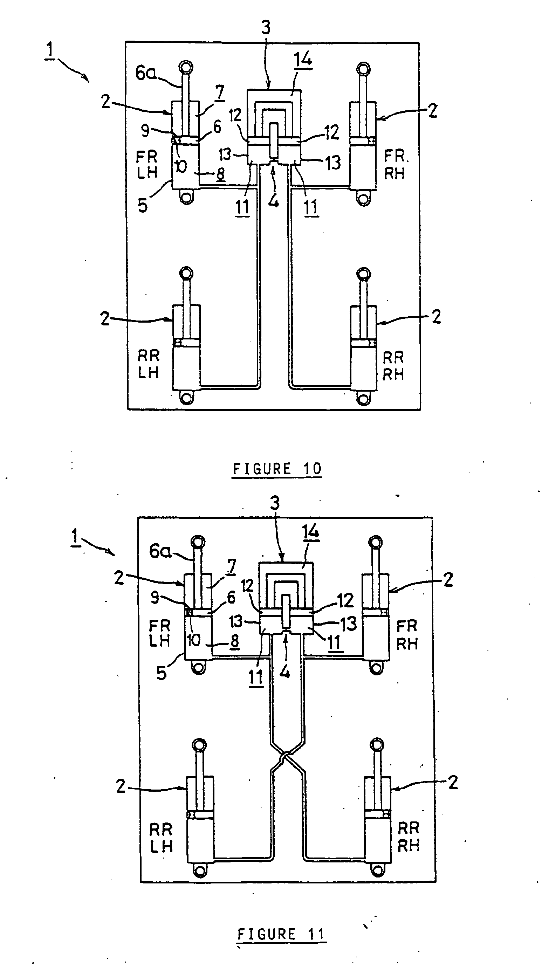

An example of a type of suspension device or system for use in four-wheeled vehicles is disclosed in a publication, a Japanese laid-open patent application No. JP 06-72127A, that forms the closest prior art according to the preamble of claim 1. The prior-art suspension system for use in four-wheeled vehicles disclosed in the above publication will be described in reference to FIGs. 10 to 12.

These figures show a prior-art suspension system 1 for use in four-wheeled vehicles.
The suspension system 1 comprises four hydraulic cylinders 2, each provided for each wheel, a pressure regulator 3 and a throttle 4 both connected to the hydraulic routes of the hydraulic cylinders 2.

The four hydraulic cylinders 2 are of an identical constitution, with each cylinder comprising a cylinder body 5 with its interior defined with a piston 6 into an upper oil chamber 7 and a lower oil chamber 8. The piston 6 is bored with a communication passage 9 making fluid communication between the upper and the lower oil chambers 7 and 8 through a throttle 10.

The lower end of the cylinder body 5 of the hydraulic cylinder 2 is pivoted to a part that moves up and down together with wheel suspension links (not shown), while the upper part of a piston rod 6a of the hydraulic cylinder 2 is connected to part of a vehicle body (not shown).

The pressure regulator 3 comprises a plural number of pressure regulating cylinders 13, each having an oil chamber 11 and a movable wall 12 for changing the volume of the oil chamber 11. The movable walls 12 of the pressure regulating cylinders 13 are formed so that their effective cross-sectional areas are the same each other, and interconnected so that the volumes of the oil chambers 11 are always the same each other. The oil chambers 11 of the pressure regulating cylinders 13 are interconnected through the throttle 4. The pressure regulator 3 is constituted to have a gas chamber 14 separated from the oil chambers 11 by means of the movable wall 12, so that the movable wall 12 is constantly forced toward the oil chamber 11 side.

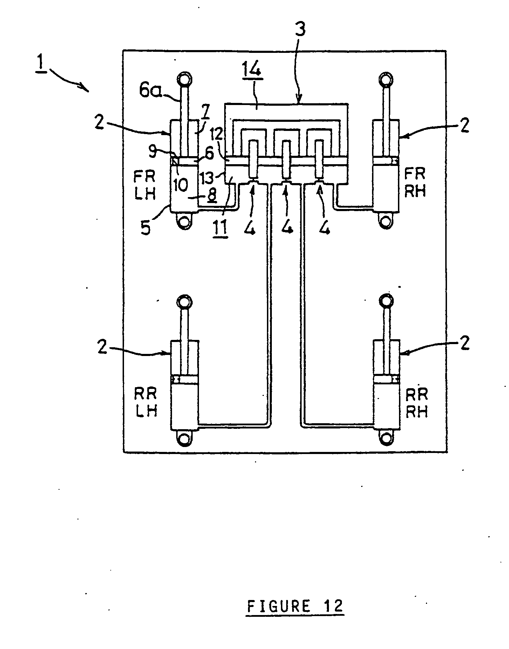

The pressure regulator 3 shown in FIG. 10 comprises two pressure regulating cylinders 13, with the lower oil chambers 8, 8 of the two hydraulic cylinders 2, 2 on the left side of the vehicle body being connected to the oil chamber 11 of one pressure regulating cylinder 13, while the lower oil chambers 8, 8 of the two hydraulic cylinders 2, 2 on the right side of the vehicle body being connected to the oil chamber 11 of the other pressure regulating cylinder 13. The pressure regulator 3 shown in FIG. 11 is arranged with one of the two pressure regulating cylinders 13 connected to the hydraulic cylinder 2 for the left front wheel and to the hydraulic cylinder 2 for the right rear wheel, and with the other of the two pressure regulating cylinders 13 connected to the hydraulic cylinder 2 for the right front wheel and to the hydraulic cylinder 2 for the left rear wheel. With the pressure regulator 3 shown in FIG. 12, pressure regulating cylinders 13 are allocated to the respective hydraulic cylinders 2, with the movable walls 12 in the respective pressure regulating cylinders 13 interconnected as a single body for interlocked movement.

With the suspension system 1 shown in FIG. 10, when the vehicle body sways laterally, or rolls, working oil in the oil chamber 11 of one pressure regulating cylinder 13 flows through the throttle 4 to the oil chamber 11 of the other pressure regulating cylinder 13. Therefore, when the vehicle body rolls, damping forces are produced as working oil flows through the throttles 10 of respective hydraulic cylinders 2 and through the throttle 4 of the pressure regulator 3. The damping force produced as working oil flows through the throttle 4 when the vehicle body pitches becomes relatively small.

With the suspension system 1 shown in FIG. 11, when the wheels as seen from the front move in a twisting direction of the vehicle body, working oil flows through the throttle 4 of the pressure regulator 3 to produce a damping force. The damping force produced as working oil flows through the throttle 4 when the vehicle body with this suspension system 1 pitches also becomes relatively small.

With the suspension system 1 shown in FIG. 12, when the vehicle body rolls, a differential oil pressure is produced between the two of the four pressure regulating cylinders 13 on the left side and the other two on the right side. The working oil flows through the three throttles 4 to offset the differential oil pressure, and the pressure regulator 3 produces a damping force. With this suspension system 1, when the vehicle body pitches, a damping force is produced as relatively greater amount of working oil flows through the two throttles 4 located on both sides.

However, the conventional suspension system 1 for four-wheeled vehicles described above has problems: When the two hydraulic cylinders 2, 2 located in paired positions on the vehicle body move in the same direction, as when the vehicle rolls or pitches, and a wheel for example enters a recess or negotiates a bump on the road, the damping force for restricting the rolling or pitching becomes unstable.

For example with the suspension system 1 shown in FIG. 10, when one of the two hydraulic cylinders 2, 2 is extended in the middle of the two is being compressed by rolling of the vehicle (in the state of a damping force being produced as working oil flows from the left side pressure regulating cylinder 13 to that on the right side), the oil pressure in the hydraulic route connected to the hydraulic cylinder 2 decreases, and the amount of working oil flowing through the throttle 4 located between the pressure regulating cylinders 13, 13 decreases. As a result, the damping force for restraining rolling decreases undesirably.

With the suspension system 1 shown in FIG. 11, although little working oil flows through the throttle 4 of the pressure regulator 3 when the vehicle body rolls, increase or decrease in the oil pressure in one of the pressure regulating cylinders 13 when the vehicle body rolls causes working oil to flow through the throttle 4 of the pressure regulator 3 to produce a damping force. In this case, the tilt of the vehicle body during rolling is temporarily restrained and gives a passenger an uncomfortable sense of incongruity.

With the suspension system 1 shown in FIG. 12, when any one of the hydraulic cylinders moves in the direction opposite to that expected during rolling, the amount of working oil flowing through the central one of the three throttles 4 decreases, and the damping force decreases undesirably. When one of the hydraulic cylinders works in the direction opposite to that expected during pitching, the amount of working oil flowing through the throttle 4 in the center increases and, like the above description, the damping force decreases undesirably.

It is an objective of the present invention to provide four-wheeled vehicle suspension device having an improved damping force characteristic.

According to the present invention said objective is solved by a four-wheeled vehicle suspension device comprises a hydraulic cylinder for each wheel, said hydraulic cylinders are provided in two pairs, wherein at least a first pair of said hydraulic cylinders is interconnected through a pressure regulator, and a second pair of hydraulic cylinders is interconnected with each other and connected with said pressure regulator by a communication passage means, wherein a flow rate regulator is provided between said pressure regulator and said second pair of hydraulic cylinders.

Preferably, said pressure regulator comprises: a first pressure regulating cylinder having a first oil chamber connected to one hydraulic cylinder of the first pair and also having a first movable wall for changing a volume of the first oil chamber; a second pressure regulating cylinder having a second oil chamber connected to the other hydraulic cylinder of the first pair and also having a second movable wall for changing the volume of the second oil chamber in interlocked motion with the first movable wall, wherein volumetric changes of the first and second oil chambers are in mutual agreement; a throttle interposed between the first and second oil chambers.

Preferably, said pressure regulator further comprises: a pressure regulating oil chamber a volume of which is changeable by the movement of the first and second movable walls.

Preferably, said pressure regulating oil chamber is connected to the hydraulic cylinders of the second pair by said communication passage means.

Preferably, said pressure regulating oil chamber is connected to the flow rate regulator.

According to a preferred embodiment said flow rate regulator comprises a flow rate regulating cylinder divided with the movable wall into a high pressure gas chamber and an oil chamber, wherein a throttle is provided between said oil chamber and said communication passage means for working oil to flow through by the movement of the movable walls of the flow rate regulating cylinder.

According to an other preferred embodiment said flow rate regulator comprises a flow rate regulating cylinder having a third pressure regulating cylinder with a third movable wall for changing a volume of the third oil chamber, a fourth pressure regulating cylinder having a fourth oil chamber connected to the second pair of hydraulic cylinders and also having a fourth movable wall for changing the volume of the fourth oil chamber in interlocked motion with the third movable wall so that volumetric changes of the third and fourth oil chambers are in mutual agreement, a high pressure gas chamber filled with a high pressure gas for urging the third and fourth movable walls toward the oil chambers, and a throttle interposed between hydraulic routes of the third and fourth oil chambers.

According to a further preferred embodiment said flow rate regulator comprises a flow rate regulating cylinder having a third pressure regulating cylinder with a third movable wall for changing a volume of the third oil chamber, a fourth pressure regulating cylinder having a fourth oil chamber connected to the second pair of hydraulic cylinders and also having a fourth movable wall for changing the volume of the fourth oil chamber in interlocked motion with the third movable wall so that volumetric changes of the third and fourth oil chambers are in mutual agreement, a third movable wall within the third pressure regulating cylinder also defines a fifth oil chamber which communicates through a throttle with an oil chamber of a fifth pressure regulating cylinder provided with a fifth moveable wall and high pressure gas chamber filled with a high pressure gas for urging the third, fourth and fifth movable walls toward the oil chambers, and a throttle interposed between hydraulic routes of the third and fourth oil chambers.

Preferably, the second pair of hydraulic cylinders is interconnected by a first communication passage and a throttle is provided between said first communication passage and said flow rate regulator.

According to a preferred embodiment said pressure regulator connecting the first pair of hydraulic cylinders is a first pressure regulator and the second pair of hydraulic cylinders is interconnected through a second pressure regulator.

Preferably, said second pressure regulator comprises a third pressure regulating cylinder having a third oil chamber connected to one hydraulic cylinder of the second pair and also having a third movable wall for changing the volume of the third oil chamber, a fourth pressure regulating cylinder having a fourth oil chamber connected to the other hydraulic cylinder of the second pair and also having a fourth movable wall for changing the volume of the fourth oil chamber in interlocked motion with the third movable wall so that the volumetric changes of the third and fourth oil chambers are in mutual agreement, and a throttle interposed between the hydraulic routes of the third and fourth oil chambers.

Preferably, the first and second pressure regulators are respectively provided with pressure regulating oil chambers, with the pressure regulating oil chambers interconnected, and with their volumes changed by the movement of movable walls of the pressure regulators.

Preferably at least one throttle is provided between the first and second pressure regulator.

According to a preferred embodiment the first pair of hydraulic cylinders interconnected through a pressure regulator are located on the same front or rear side of the vehicle body.

According to an other preferred embodiment the first pair of hydraulic cylinders interconnected through a pressure regulator are located on the same left or right side of the vehicle body.

According to a further preferred embodiment the first pair of hydraulic cylinders interconnected through a pressure regulator are located on opposing sides regarding a front and rear side and left and right side of the vehicle body to constitute a cross connection of the hydraulic cylinders.

According to the embodiments each hydraulic cylinder comprises a piston connected to one of vehicle body and wheel sides and a cylinder body connected to the other of the vehicle body and wheel sides, and each hydraulic cylinder comprises an oil chamber, wherein said oil chambers of the hydraulic cylinders is connected with the respective pressure regulator or flow rate regulator.

In the following, the present invention is explained in greater detail with respect to several embodiments thereof in conjunction with the accompanying drawings, wherein:
FIG. 1 shows the constitution of a four-wheeled vehicle suspension device as a first embodiment;
FIG. 2 shows the constitution of a four-wheeled vehicle suspension device as a second embodiment;
FIG. 3 shows a different embodiment of a flow rate regulator;
FIG. 4 shows the constitution of a four-wheeled vehicle suspension device as another (third) embodiment;
FIG. 5 shows the constitution of a four-wheeled vehicle suspension device as a fourth embodiment;
FIG. 6 shows the constitution of a four-wheeled vehicle suspension device as a fifth embodiment;
FIG. 7 shows the constitution of a four-wheeled vehicle suspension device as another (sixth) embodiment;
FIG. 8 shows the constitution of a four-wheeled vehicle suspension device as another (seventh) embodiment;
FIG. 9 shows another embodiment of a flow rate regulator;
FIG. 10 is a cross-sectional view of a conventional four-wheeled vehicle suspension device;
FIG. 11 is a cross-sectional view of a conventional four-wheeled vehicle suspension device; and
FIG. 12 is a cross-sectional view of a conventional four-wheeled vehicle suspension device.

### First Embodiment

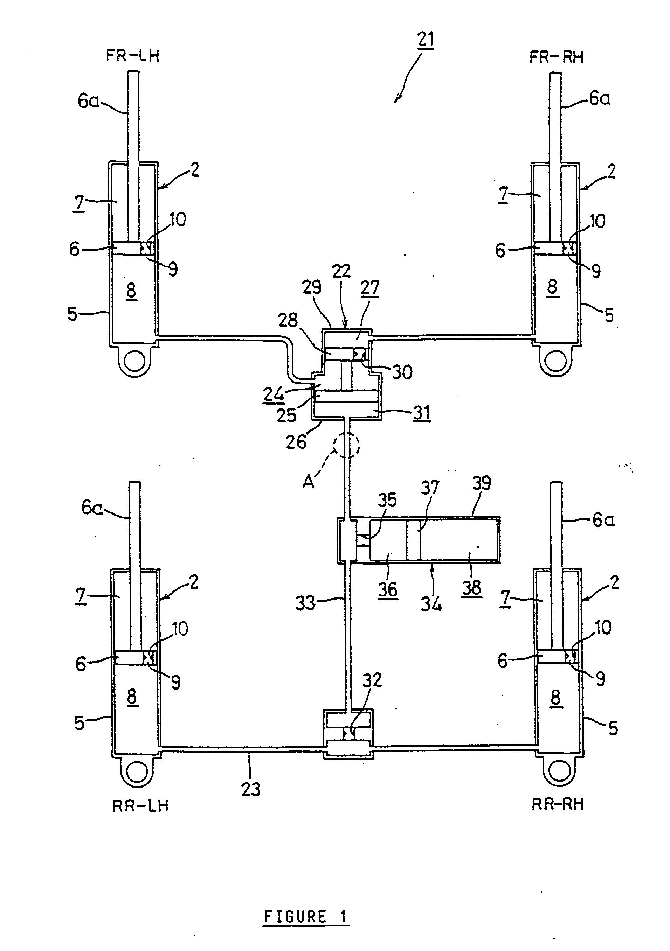

The four-wheeled vehicle suspension device or system according to the first embodiment will be described in detail in reference to FIG. 1.

FIG. 1 shows the constitution of an embodiment of the four-wheeled vehicle suspension. In the figure, components that are the same as or similar to those described in reference to FIGs. 10 to 12 are provided with the same key numbers and their detailed descriptions are omitted.

The four-wheeled vehicle suspension system 21 shown in FIG. 1 is constituted that the lower oil chamber 8 of the hydraulic cylinder 2 for the left front wheel is connected to the lower oil chamber 8 of the hydraulic cylinder 2 for the right front wheel through a pressure regulator 22, and the lower oil chamber 8 of the hydraulic cylinder 2 for the left rear wheel is connected to the lower oil chamber 8 of the hydraulic cylinder 2 for the right rear wheel through a first communication passage 23.

The pressure regulator 22 comprises a first and a second pressure regulating cylinders 26 and 29, with the former having a first oil chamber 24 connected to the lower oil chamber 8 of the hydraulic cylinder 2 for the left front wheel and a first movable wall 25 for changing the volume of the first oil chamber 24, and with the latter having a second oil chamber 27 connected to the lower oil chamber 8 of the hydraulic cylinder 2 for the right front wheel and a second movable wall 28 for changing the volume of the second oil chamber 27 by interlocked motion with the first movable wall 25 so that the volumetric changes of the first and second oil chambers 24 and 27 are in agreement with each other. The first and the second pressure regulating cylinders 26 and 29 of this embodiment are formed as a single component so that the first and second movable walls 25 and 28 are located coaxially. The movable walls 25 and 28 of the pressure regulating cylinders 26 and 29 are formed so that the effective cross-sectional areas of the first and second oil chambers 24 and 27 are equal to each other and interconnected so that the volumes of the first and second oil chambers 24 and 27 are always equal to each other. In this embodiment, mutual fluid communication between the hydraulic routes of the first and second oil chambers 24 and 27 is made through a throttle 30 bored in the second movable wall 28.

The first pressure regulating cylinder 26 is formed with a pressure regulating oil chamber 31 the volume of which is changed by the movement of the first and second movable walls 25 and 28. The pressure regulating oil chamber 31 is made to communicate with a first communication passage 23, interconnecting the lower oil chambers 8 of the two hydraulic cylinders 2 for the rear wheels, through a throttle 32 and a second communication passage 33.

The second communication passage 33 is connected to a flow rate regulator 34. The flow rate regulator 34 comprises a single cylinder 39 the interior of which is dived with a movable wall 37 into an oil chamber 36 connected through a throttle 35 to the second passage 33 and a high pressure gas chamber 38. The cylinder 39 corresponds to the flow rate regulating cylinder. The high pressure gas chamber 38 is filled with a high pressure gas. As the movable wall 37 moves right and left as seen in FIG. 1, working oil flows through the throttle 35.

With the four-wheeled vehicle suspension system 21 constituted as shown in FIG. 1, for example when the vehicle body rolls so that the hydraulic cylinders 2, 2 for the front and rear wheels on the left side are compressed and the hydraulic cylinders 2, 2 for the front and rear wheels on the right side are extended, namely during a right turn of a vehicle, damping forces are produced as working oil flows through a throttle 10 bored in the piston 6 of each hydraulic cylinder 2 and as working oil flows through the throttle 30 of the pressure regulator 22. The damping force is produced with the pressure regulator 22 because the increase in the oil pressure in the first oil chamber 24 and the decrease in the oil pressure in the second oil chamber 27, in the state of the first and second movable walls 25 and 28 of the pressure regulator 22 remaining motionless, cause working oil to flow through the throttle 30. The first and the second movable walls 25 and 28 remain motionless because working oil flows from the hydraulic cylinder 2 for the left rear wheel to the hydraulic cylinder 2 for the right rear wheel, and working oil does not flow into or out of the pressure regulating chamber 31.

When for example the left front wheel enters a recess on the road surface during the above-described rolling, and the action of the hydraulic cylinder 2 for the left front wheel changes from compression to extension (different from the action during the rolling), the pressure in the first oil chamber 24 of the pressure regulator 22 decreases. At this time, since the pressure in the second oil chamber 27 tends to decrease, the first and second movable walls 25 and 28 move upward as seen in FIG. 1 due to the oil pressure in the first and second oil chambers 24 and 27, and the volume of the pressure regulating chamber 31 increases. As a result, working oil flows out of the oil chamber 36 of the flow rate regulator 34 through the throttle 35 to the second communication passage 33. Thus, the throttle 35 produces a damping force. A similar phenomenon also occurs when a hydraulic cylinder 2 on the opposite, right or left side makes an action different from the action during rolling, namely when the hydraulic cylinder 2 that extends during rolling is compressed as affected with the road surface irregularities. In that case, the damping force is produced as working oil flows from the second communication passage 33 through the throttle 35 into the oil chamber 36 of the flow rate regulator 34.

When an action different from that occurring during rolling occurs at the hydraulic cylinder 2 on the rear wheel side, for example when the left rear wheel enters a recess on the road surface while the vehicle is making a right turn, the hydraulic cylinder 2 for the left rear wheel is extended while the hydraulic cylinder 2 for the right rear wheel is extended. As a result, working oil flows from the second communication passage 33 into the first communication passage 23. At this time, since the first and second movable walls 25 and 28 of the pressure regulator 22 are held to an immovable state, working oil flowing into the first communication passage 23 is mainly supplied from the oil chamber 36 of the flow rate regulator 34. That is, a damping force is produced as working oil flows from the oil chamber 36 of the flow rate regulator 34 through the throttle 35 into the second communication passage 33. On the contrary, when the hydraulic cylinder 2 for the right rear wheel is compressed with a bump on the road surface during a right turn of the vehicle, a damping force is produced as working oil flows from the second communication passage 33 through the throttle 35 into the oil chamber 36 of the flow rate regulator 34.

In this way, when a hydraulic cylinder 2 on the wheel side makes an action that is different from that occurring while the vehicle is rolling, working oil flows into or out of the flow rate regulator 34 through the throttle 35.

As a result, the damping force produced as working oil passes through the throttle 35 stabilizes the damping force that restricts the rolling of the vehicle.

In this embodiment, the first communication passage 23 interconnecting the lower oil chambers 8, 8 of the hydraulic cylinders 2, 2 for the left and right rear wheels through the throttle 32 to the second communication passage 33 on the side of the flow rate regulator 34. Therefore, a damping force is produced as working oil flows into or out of the second communication passage 33, and the behavior of the vehicle body during rolling is all the more stabilized.

With the four-wheeled vehicle suspension system 21 shown in FIG. 1, when the front part and the rear part of the vehicle body move in mutually different directions, or the vehicle pitches, damping forces are produced with the throttles 10 bored in the pistons 6 of respective hydraulic cylinders 2 and with the throttle 32 interposed between the first and second communication passages 23 and 33. When the front part and the rear part of the vehicle body move in the same directions, or the vehicle bounces, damping forces are produced with the throttles 10 bored in the pistons 6 of respective hydraulic cylinders 2, with the throttle 35 provided in the flow rate regulator 34, and with the throttle 32 interposed between the first and second communication passages 23 and 33. At this time, the pressure of high pressure gas in the flow rate regulator 34 works as a spring force.

In this embodiment of four-wheeled vehicle suspension system 21, a throttle may be disposed at the position indicated with the symbol A in FIG. 1, namely in the middle of the second communication passage 33 between the pressure regulating oil chamber 31 of the pressure regulator 22 and the flow rate regulator 34. Providing this throttle makes it possible to increase the damping force during pitching and bouncing. Incidentally, the position of the flow rate regulator 34 is not limited to that shown in FIG. 1 but may be connected to the middle of the first communication passage 23.

This embodiment is an example in which the two hydraulic cylinders 2 on the front wheel side are respectively connected to the pressure regulator 22. However, it may also be constituted in reversed front-rear relation, with the hydraulic cylinder 2 for the left rear wheel and the hydraulic cylinder 2 for the right rear wheel interconnected through the pressure regulator 22, and with the two hydraulic cylinders 2 on the front wheel side interconnected. Employing this constitution makes it possible to produce a damping force against the vertical movement of the front part of the vehicle body with the throttle 32 interposed between the first and second communication passages 23 and 33. This makes it possible to prevent damping forces from becoming short even if the sprung weight on the front wheel side is relatively great.

Although the throttle 32 interposed between the first and second communication passages 23 and 33 can be omitted, presence of the throttle 32 increases the damping force when the two hydraulic cylinders 2 on the rear wheel side work in the same direction, the damping force is prevented from becoming short when a heavy object is loaded on a deck (not shown) on the rear wheel side.

### Second Embodiment

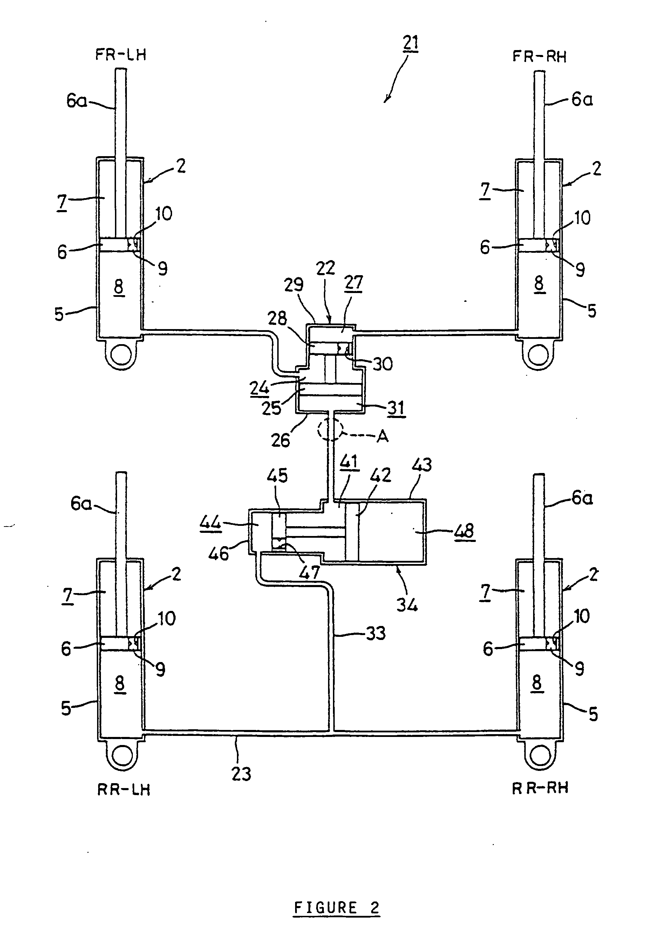

The four-wheeled vehicle suspension device or system according to the second embodiment will be described in detail in reference to FIG. 2.

FIG. 2 shows the constitution of the four-wheeled vehicle suspension system of the second embodiment. In the figure, components that are the same as or similar to those described in reference to FIGs. 10 to 12 are provided with the same symbols or key numbers and their detailed descriptions are omitted.

The constitution of the four-wheeled vehicle suspension system 21 shown FIG. 2 is the same as that of the first embodiment except for the constitution of the flow rate regulator and the direct connection of the first communication passages 23 to the second communication passage 33. The flow rate regulator 34 of this embodiment comprises; a third pressure regulating cylinder 43 and a fourth pressure regulating cylinder 46, with the cylinder 43 having a third oil chamber 41 communicating with the pressure regulating oil chamber 31 of the pressure regulator 22 and a third movable wall 42 for changing the volume of the third oil chamber 41, with the cylinder 46 having a fourth oil chamber 44 communicating with the first communication passage 23 and a fourth movable wall 45 for changing the volume of the fourth oil chamber 44 by the interlocked motion with the third movable wall 42 so that the volumetric changes of the third and the fourth oil chambers 41 and 44 are in mutual agreement.

The third and the fourth pressure regulating cylinders 43 and 46 are formed in a single body so that the third and the fourth movable walls 42 and 45 are located coaxially. The third and the fourth movable walls 42 and 45 are formed so that the effective cross-sectional areas of the third and the fourth oil chambers 41 and 44 are in mutual agreement, and that they are interconnected so that the volumes of the third and the fourth oil chambers 41 and 44 are always in mutual agreement. In this embodiment, the hydraulic routes of the third and fourth oil chambers 41 and 44 are made to communicate with each other through a throttle 47 provided in the fourth movable wall 45.

A high pressure gas chamber 48 defined with the third movable wall 42 is formed integrally with the third pressure regulating cylinder 43. The high pressure gas chamber 48 is filled with a gas to a high pressure. Working oil flows through the throttle 47 bored in the fourth movable wall 45 as the third and the fourth movable walls 42 and 45 move right or left as seen in FIG. 1.

When this embodiment is employed, a throttle is not provided between the first communication passage 23, interconnecting the hydraulic cylinders 2, 2 for the right and left rear wheels, and the second communication passage 33.

When a vehicle body provided with the four-wheeled vehicle suspension system 21 constituted as shown in FIG. 2 rolls, damping forces against rolling are produced as working oil flows through the throttles 10 formed in the pistons 6 disposed in respective hydraulic cylinders 2 and through the throttle 30 provided in the pressure regulator 22.

When any one of the four hydraulic cylinders 2 works in a direction that is different from that normally occurring during rolling, a differential pressure is produced between the hydraulic routes on the front wheel and rear wheel sides, and working oil flows through the throttle 47 between the third and the fourth oil chambers 41 and 44. The oil flow through the throttle 47 produces a damping force which stabilizes the damping force that restricts the rolling.

Therefore, when a hydraulic cylinder 2 on the wheel side makes an action that is different from that normally occurring during rolling, a damping force is produced with the throttle 47 of the flow rate regulator 34 to stabilize the damping force that restricts the rolling.

When a vehicle body provided with the four-wheeled vehicle suspension system 21 shown in FIG. 2 pitches, damping forces are produced with the throttles 10 bored in the pistons 6 of respective hydraulic cylinders 2 and with the throttle 47 provided in the pressure regulator 34. When the vehicle bounces, damping forces are produced only with the throttles 10 bored in the pistons 6 of respective hydraulic cylinders 2. When the vehicle bounces, the pressure of the high pressure gas in the flow rate regulator 34 works as a spring force.

When this embodiment is employed, a throttle may be provided at a position indicated with the symbol A in FIG. 2, namely at a position in the middle of the second communication passage 33 between the pressure regulating oil chamber 31 of the pressure regulator 22 and the third oil chamber 41 of the flow rate regulator 34. Providing this throttle makes it possible to increase the damping force during pitching and bouncing. Moreover, since the throttle produces a damping force against the vertical displacement of the front part of the vehicle, it is possible to prevent damping forces from becoming short even if the sprung weight on the front wheel side is relatively great.

This embodiment is an example in which the two hydraulic cylinders 2 on the front wheel side are respectively connected to the pressure regulator 22. However, it may also be constituted in reversed front-rear relation, with the hydraulic cylinder 2 for the left rear wheel and the hydraulic cylinder 2 for the right rear wheel interconnected through the pressure regulator 22, and with the two hydraulic cylinders 2 on the front wheel side interconnected.

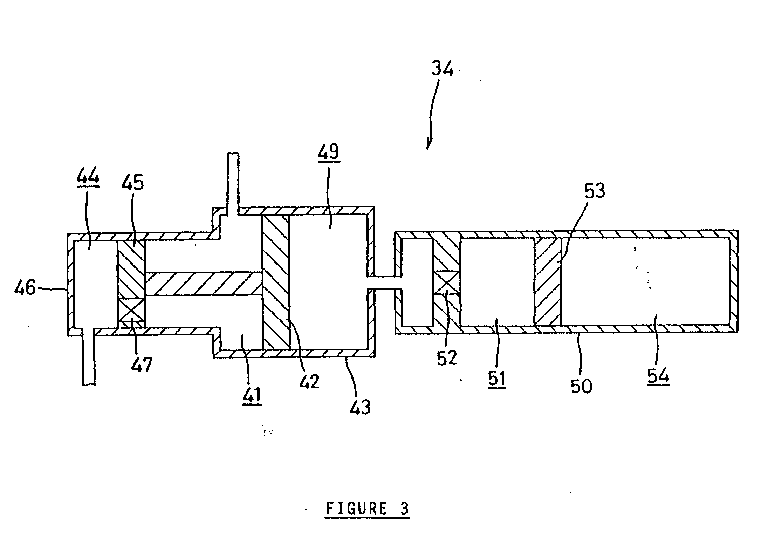

The flow rate regulator 34 may be constituted as shown in FIG. 3.

FIG. 3 shows the constitution of another embodiment of the flow rate regulator. In the figure, components that are the same as or similar to those described in reference to FIG. 2 are provided with the same symbols and their detailed explanations are omitted.

The flow rate regulator 34 shown in FIG. 3 employs a fifth oil chamber 49 in place of the high pressure gas chamber in the third pressure regulating cylinder 43. The fifth oil chamber 49 is made to communicate through a throttle 52 with the oil chamber 51 of a fifth pressure regulating cylinder 50 formed separately from the third pressure regulating cylinder 43. The fifth pressure regulating cylinder 50 is formed with a movable wall 53 defining the oil chamber 51 and a high pressure gas chamber 54. The high pressure gas chamber 54 is filled with a high pressure gas.

With the flow rate regulator 34 constituted as described above, working oil flows through the throttle 52 of the fifth pressure regulating cylinder 50 when the third and the fourth movable walls 42 and 45 move, as when the vehicle bounces. That is, a damping force is produced to restrict the bouncing movement.

### Third Embodiment

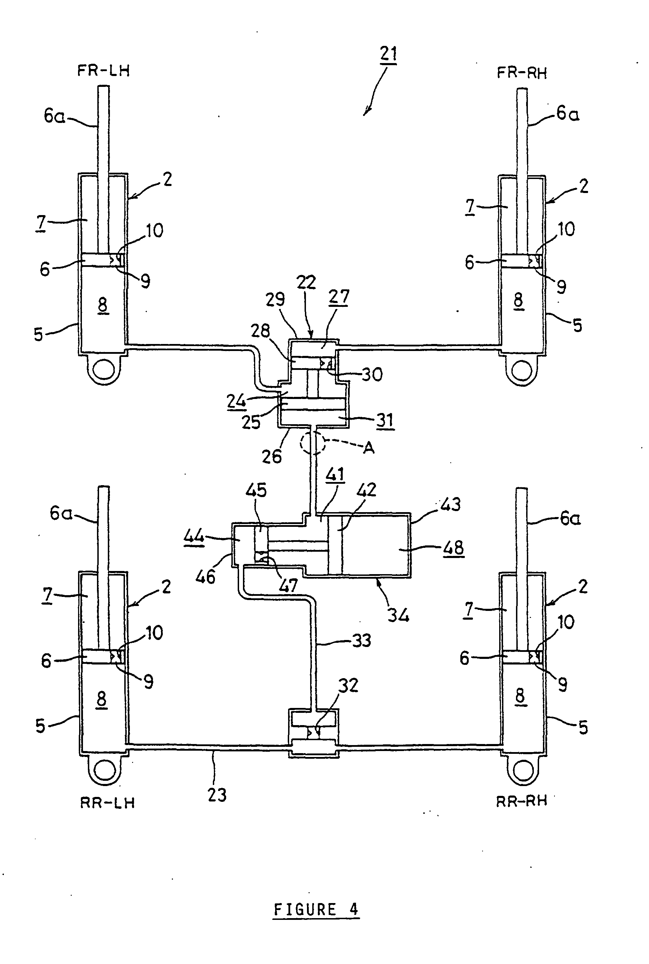

The four-wheeled vehicle suspension device or system according to the third embodiment may be constituted as shown in FIG. 4.

FIG. 4 shows another form of embodiment of the four-wheeled vehicle suspension system. Components that are the same as or similar to those described in reference to FIGs. 1, 2, 10, and 12 are provided with the same symbols and their detailed explanations are omitted.

The constitution of the four-wheeled vehicle suspension system 21 shown in FIG. 4 is the same as that of the second embodiment except that a throttle 32 is interposed between the first communication passage 23 interconnecting the hydraulic cylinder 2 for the left rear wheel and the second communication passage 33 in which the flow rate regulator 34 is interposed.

With this embodiment provided with the throttle 32, a damping force is produced as working oil flows through the throttle 32 when the vehicle pitches or bounces. Moreover, since the damping force when the two hydraulic cylinders 2 on the rear wheel side move in the same direction can be increased, the damping force is prevented from becoming short when a heavy object is loaded on a deck (not shown) on the rear wheel side.

Also in the case this embodiment is employed, a throttle may be interposed at the position indicated with the symbol A, and the flow rate regulator 34 may be replaced with the one shown in FIG. 3.

### Fourth Embodiment

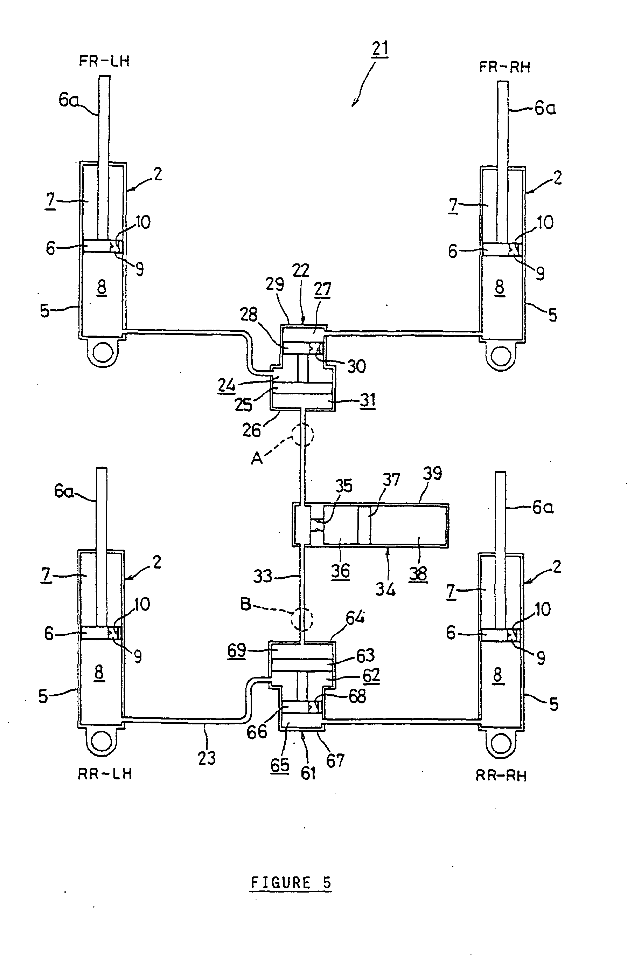

An embodiment of the four-wheeled vehicle suspension device or system will be described in detail in reference to FIG. 5.

FIG. 5 shows another form of embodiment of the four-wheeled vehicle suspension system. Components that are the same as or similar to those described in reference to FIGs. 1, to 4, 10, and 12 are provided with the same symbols and their detailed explanations are omitted.

The four-wheeled vehicle suspension system 21 shown in FIG. 5 is constituted like the first to the third embodiments with the hydraulic cylinders 2 for the right and left front wheels interconnected through the pressure regulator 22. The pressure regulator 22 is referred to as "the first pressure regulator" in the following description.

On the other hand, the hydraulic cylinders 2 for the right and left rear wheels are interconnected through the first communication passage 23 having a second pressure regulator 61 which will be described later. The second pressure regulator 61 comprises; a third pressure regulating cylinder 64 having a third oil chamber 62 communicating with the lower oil chamber 8 of the hydraulic cylinder 2 for the left rear wheel and having a third movable wall 63 for changing the volume of the third oil chamber 62; a fourth pressure regulating cylinder 67 having a fourth movable wall 66 for changing the volume of the fourth oil chamber 65 in interlocked motion with the third movable wall 63 so that changes in the volumes of the third and fourth oil chambers 62 and 65 are mutually in agreement; a throttle 68 interposed between the hydraulic routes of the third and fourth oil chambers 62 and 65, and a pressure regulating oil chamber 69 the volume of which is changed as the third and fourth movable walls 63 and 66 move.

The pressure regulating oil chamber 31 of the first pressure regulator 22 and the pressure regulating oil chamber 69 of the second pressure regulator 61 are interconnected through the second communication passage 33. The second communication passage 33 is connected to the flow rate regulator 34. The flow rate regulator 34 is constituted the same as in the first embodiment.

When the vehicle body provided with the four-wheeled vehicle suspension system 21 shown in FIG. 5 rolls, damping forces are produced as working oil flows through the throttles 10 formed in the pistons 6 of respective hydraulic cylinders 2 and through the throttles 30 and 68 of the first and second pressure regulators 22 and 61, respectively. When one of the four hydraulic cylinders 2 for the left front wheel for example makes an action that is different from the action normally occurring during rolling as the left front wheel enters a recess on the road, the oil flow rate through the throttle 30 in the first pressure regulators 22 decreases (the damping force decreases), the first and second movable walls 25 and 28 move, and the volume of the pressure regulating oil chamber 31 of the first pressure regulator 22 changes. On the other hand, in the second pressure regulator 61 communicating with the two hydraulic cylinders 2 on the vehicle body rear side, the movable walls 63 and 66 are held immovable at this time, and the volume of the pressure regulating chamber 69 remains unchanged. As a result, the volumetric change of the hydraulic route due to the movement of the first and second movable walls 25 and 28 is offset by the movement of the movable wall 37 of the flow rate regulator 34. That is to say, a damping force is produced as working oil flows into or out through the throttle 35 of the flow rate regulator 34. This phenomenon occurs likewise when one of the hydraulic cylinders 2 for the rear wheels makes an action that is different from the action normally occurring during rolling of the vehicle.

Therefore, the damping force produced with the first or second pressure regulator 22 or 61 decreases on one hand when the vehicle negotiates an irregular road surface while the vehicle is rolling, on the other hand a damping force is produced with the flow rate regulator 34. In this way, the damping force for restricting rolling is stabilized.

With the four-wheeled vehicle suspension system 21 shown in FIG. 5, damping forces when the vehicle pitches are produced only with the throttles 10 provided in the pistons of the respective hydraulic cylinders 2. That is, the damping force during rolling is relatively reduced and the behavior of the vehicle becomes slow. The damping force during pitching is produced with both the throttles 10 provided in the pistons of the respective hydraulic cylinders 2 and the throttle 35 in the flow rate regulator 34. When the vehicle bounces, the pressure of high pressure gas in the flow rate regulator 34 works as a spring force.

Another feature of this embodiment is that the first and second pressure regulator 22 and 61 can work independently of each other. Therefore, even in the case that the two hydraulic cylinder 2 for the front wheels behave like in a left turn and the two hydraulic cylinder 2 for the rear wheels behave like in a right turn, damping forces are also produced. Moreover, it is possible to set individually the damping force characteristics of the throttle 30 of the first pressure regulator 22 and the throttle 68 of the second pressure regulator 61.

When this embodiment is employed, a throttle or throttles may be provided in the position A or B, or both positions A and B indicated in FIG. 5; the position A in the middle of the second communication passage 33 and between the pressure regulating chamber 31 of the first pressure regulator 22 and the flow rate regulator 34, and the position B in the middle of the second communication passage 33 and between the flow rate regulator 34 and the second pressure regulator 61. Providing the throttle or throttles in this way, the damping force during pitching or bouncing can be increased. In particular, providing a throttle in the position A makes it possible to produce a damping force against the vertical movement of the front part of the vehicle and to prevent the damping force from becoming short even if the sprung weight on the front wheel side is relatively great. Also, since the damping force when the two hydraulic cylinders 2 on the rear wheel side move in the same direction can be increased by providing the throttle in the position B, the damping force is prevented from becoming short even when a heavy objected is loaded on a carrier deck (not shown) on the rear wheel side.

Another constitution is also possible, in which two hydraulic cylinders on one, right or left side of the vehicle body are connected to the first pressure regulator 22, and the other two hydraulic cylinders are connected to the second pressure regulator 61. When this constitution is employed, the same phenomenon as that occurring during rolling with the constitution shown in FIG. 5 occurs during pitching. That is, the decrease in the damping forces of the first and second pressure regulators 22 and 61 during pitching are offset with the damping force produced with the flow rate regulator 34.

Another example of different constitution is that the hydraulic cylinders 2 for the left front and the right rear wheels are connected to the first pressure regulator 22, and the hydraulic cylinders 2 for the right front and the left rear wheels are connected to the second pressure regulator 61. With this constitution, the same phenomenon as that described above occurs when wheels as seen from the front move in a twisting direction of the vehicle body. That is, the decrease in the damping forces produced with the pressure regulators 22 and 61 is offset with the damping force produced with the flow rate regulator 34.

### Fifth Embodiment

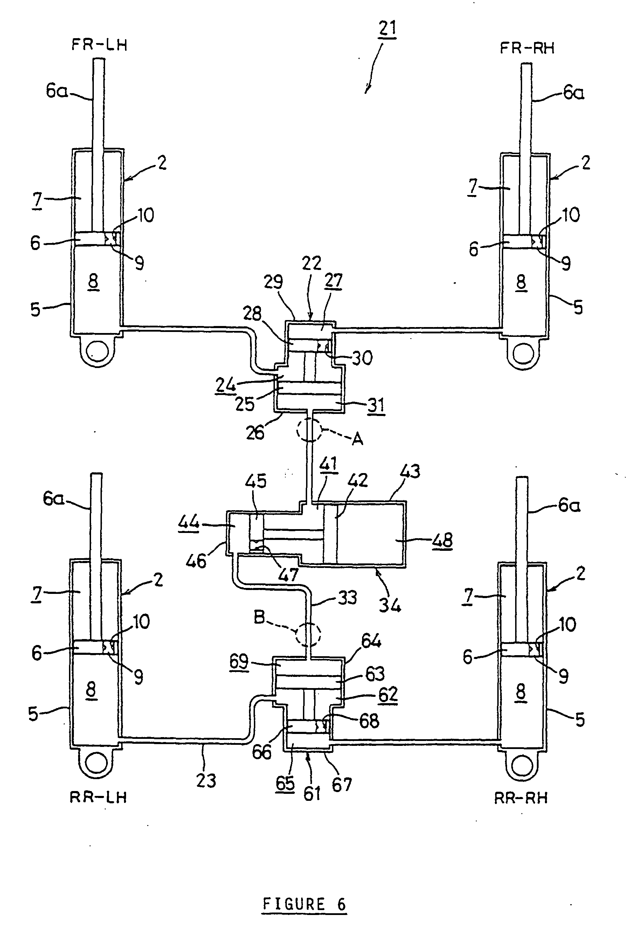

The four-wheeled vehicle suspension device or system according to the fifth embodiment will be described in detail in reference to FIG. 6.

FIG. 6 shows the constitution of the four-wheeled vehicle suspension system. In the figure, components that are the same as or similar to those described in reference to FIGs. 1 to 5, 10 to 12 are provided with the same symbols and their detailed descriptions are omitted.

The four-wheeled vehicle suspension system 21 shown in FIG. 6 is constituted like the fourth embodiment, with the two hydraulic cylinders 2 for the front wheels interconnected through the first pressure regulator 22, and with the two hydraulic cylinders 2 for the rear wheels interconnected through the second pressure regulator 61. A flow rate regulator 34 of the same constitution as that in the second embodiment is interposed in the second communication passage 33 which interconnects the pressure regulating oil chamber 31 of the first pressure regulator 22 and the pressure regulating oil chamber 69 of the second pressure regulator 61.

When a vehicle provided with the four-wheeled vehicle suspension system 21 constituted as shown in FIG. 6 rolls, damping forces are produced as the working oil flows through the throttles 10 provided in the pistons 6 of the respective hydraulic cylinders 2, and through the throttles 30 and 68 provided in the first and second pressure regulators 22 and 61. When one of the four wheels, for example the left front wheel, enters a recess on the road while the vehicle is rolling and the hydraulic cylinder 2 for the left front wheel moves in the direction opposite that is expected when the vehicle rolls, the working oil flow rate through the throttle 30 in the first pressure regulator 22 decreases (the damping force decreases), the first and second movable walls 25 and 28 move, and the volume of the pressure regulating chamber 31 of the first pressure regulator 22 changes. On the other hand, in the second pressure regulator 61 communicating with the two hydraulic cylinders 2 on the vehicle body rear side, the movable walls 63 and 66 are held immovable and the volume of the pressure regulating chamber 64 does not change. Therefore, the volumetric change in the hydraulic route with the movement of the movable walls 25 and 28 of the first pressure regulator 22 is offset with the volumetric change caused by the movement of the movable walls 42 and 45 of the flow rate regulator 34. That is, a damping force is produced as the working oil flows through the throttle 47 of the flow rate regulator 34 between the third oil chamber 41 and the fourth oil chamber 44. This phenomenon occurs likewise when one of the hydraulic cylinders 2 for the rear wheels move in the direction different from that expected when the vehicle rolls.

Therefore, when the vehicle negotiates an irregular road surface during rolling, in place of the decrease in the damping force produced with the first or second pressure regulator 22 or 61, a damping force is produced with the flow rate regulator 34, so that the damping force for restricting rolling is stabilized.

When a vehicle provided with the four-wheeled vehicle suspension system 21 shown in FIG. 6 pitches, damping forces are produced with both the throttles 10 provided in the pistons of the respective hydraulic cylinders 2 and the throttle 47 of the flow rate regulator 34. When the vehicle bounces, the damping force is produced only with the throttles 10 provided in the pistons of the respective hydraulic cylinders 2. During bouncing, the pressure of high pressure gas in the flow rate regulator 34 works as a spring force.

When this embodiment is employed, since the first and second pressure regulators 22 and 61 work independently, damping forces are produced even when the two hydraulic cylinders 2 for the front wheel work as expected during a left turn while the two hydraulic cylinders 2 for the rear wheel work as expected during a right turn. Moreover, the throttle 30 of the first pressure regulator 22 may be set to have a different damping characteristic from that of the throttle 68 of the second pressure regulator 61.

When this embodiment is employed, a throttle may be provided in the position A or B, or both positions A and B indicated in FIG. 6; the position A in the middle of the second communication passage 33 and between the pressure regulating chamber 31 of the first pressure regulator 22 and the flow rate regulator 34, and the position B in the middle of the second communication passage 33 and between the flow rate regulator 34 and the second pressure regulator 61. Providing the throttle(s) in this way, the damping force during pitching or bouncing can be increased. In particular, providing a throttle in the position A makes it possible to produce a damping force against the vertical movement of the front part of the vehicle and to prevent the damping force from becoming short even if the sprung weight on the front wheel side is relatively great. Also, since the damping force when the two hydraulic cylinders 2 on the rear wheel side move in the same direction can be increased by providing the throttle in the position B, the damping force is prevented from becoming short even when a heavy objected is loaded on a carrier deck (not shown) on the rear wheel side.

Also when this embodiment is employed, the flow rate regulator 34 may be replaced with the one shown in FIG. 3.

### Sixth Embodiment

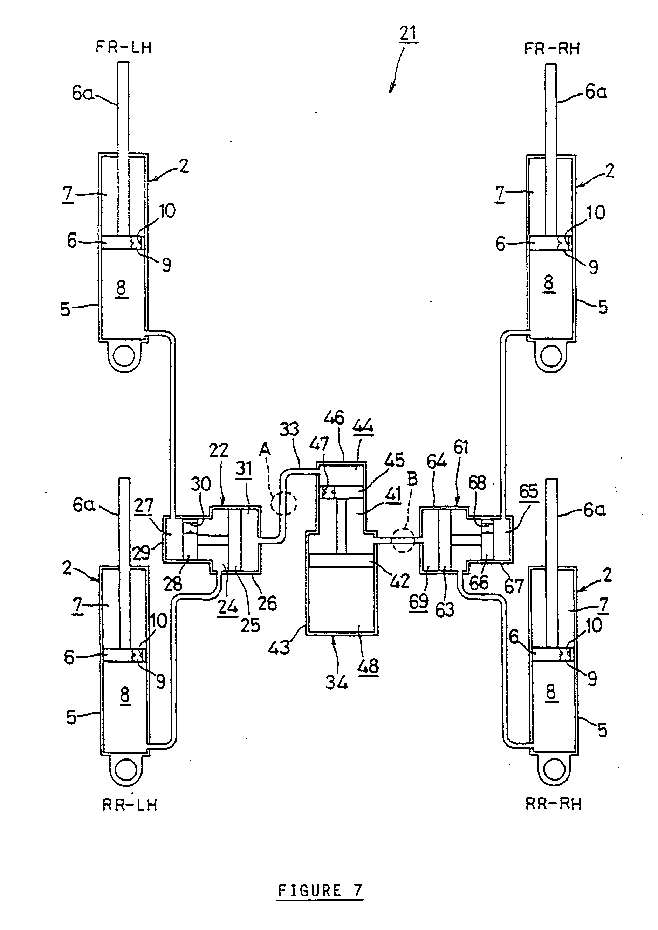

The four-wheeled vehicle suspension device or system according to the sixth embodiment may be constituted as shown in FIG. 7.

FIG. 7 shows the constitution of another embodiment of the four-wheeled vehicle suspension system. In the figure, components that are the same as or similar to those described in reference to FlGs. 1 to 6, 10 to 12 are provided with the same symbols and their detailed descriptions are omitted.

The four-wheeled vehicle suspension system 21 shown in FIG. 7 is constituted with the hydraulic cylinders 2 for the left front and left rear wheels interconnected through the first pressure regulator 22, and with the hydraulic cylinders 2 for the right front and right rear wheels interconnected through the second pressure regulator 61. A flow rate regulator 34 of the same constitution as in the second embodiment is interposed in the second communication passage 33 interconnecting the pressure regulating chamber 31 of the first pressure regulator 22 and the pressure regulating chamber 69 of the second pressure regulator 61.

When a vehicle body provided with the four-wheeled vehicle suspension system 21 constituted as shown in FIG. 7 rolls, damping forces are produced as the working oil flows through the throttles 10 provided in the pistons 6 of the respective hydraulic cylinders 2, and through the throttle 47 of the flow rate regulator 34. When one of the four wheels, for example the left front wheel, enters a recess on the road while the vehicle is rolling and the hydraulic cylinder 2 for the left front wheel moves in the direction opposite that is expected when the vehicle rolls, a differential pressure is produced between the first oil chamber 24 and the second oil chamber 27 of the first pressure regulator 22, and the working oil flows through the throttle 30 of the first pressure regulator 22. The oil flow through the throttle 30 produces a damping force. This phenomenon occurs likewise when one of the hydraulic cylinders 2 for the rear wheels moves in a different direction from that expected during rolling.

Therefore, when the vehicle negotiates an irregular road surface during rolling, in place of the decrease in the damping force produced with the flow rate regulator 34, a damping force is produced with the first or second pressure regulator, so that the damping force for restricting rolling is stabilized.

When a vehicle provided with the four-wheeled vehicle suspension system shown in FIG. 7 pitches, damping forces are produced with both the throttles provided in the pistons of the respective hydraulic cylinders and the throttles in the first and second pressure regulators. When the vehicle bounces, the damping force is produced only with the throttles provided in the pistons of the respective hydraulic cylinders. During the bouncing, the pressure of high pressure gas in the flow rate regulator works as a spring force.

When this embodiment is employed, since the first and second pressure regulators 22 and 61 work independently, damping forces are produced even when the two hydraulic cylinders 2 on the left side of the vehicle move in directions occurring when the vehicle nose-dives (with the front part of the vehicle moving down) and the two hydraulic cylinders 2 on the right side of the vehicle move in directions occurring when the vehicle makes a nose-up movement (with the rear part of the vehicle moving down), namely when the front wheels and the rear wheels as seen from the front move in directions in which the vehicle body is twisted. Moreover, it is possible to set individually the damping force characteristics of the throttle 30 of the first pressure regulator 22 and the throttle 68 of the second pressure regulator 61.

Furthermore, the working oil flow rate through the throttle 47 in the flow rate regulator 34 corresponds to the inflow or outflow rate of the working oil to or from the front and rear two hydraulic cylinders on the right or left side. Therefore, the damping force during rolling can be increased in comparison with that during pitching or when the front and rear wheels as seen from the front move in the twisting directions. As a result, rolling can be sufficiently restricted even if throttles having the same damping characteristic are used for the first and second pressure regulators 22 and 61, and the flow rate regulator 34.

When this embodiment is employed, a throttle may be provided in either one or both of the position indicated with the symbol A in FIG. 7, between the first pressure regulator 22 and the flow rate regulator 34, and the position indicated with the symbol B between the flow rate regulator 34 and the second pressure regulator 61. Providing the throttle or throttles in this way can increase the damping force during rolling or bouncing.

Also when this embodiment is employed, the flow rate regulator may be replaced with the one shown in FIG. 3.

### Seventh Embodiment

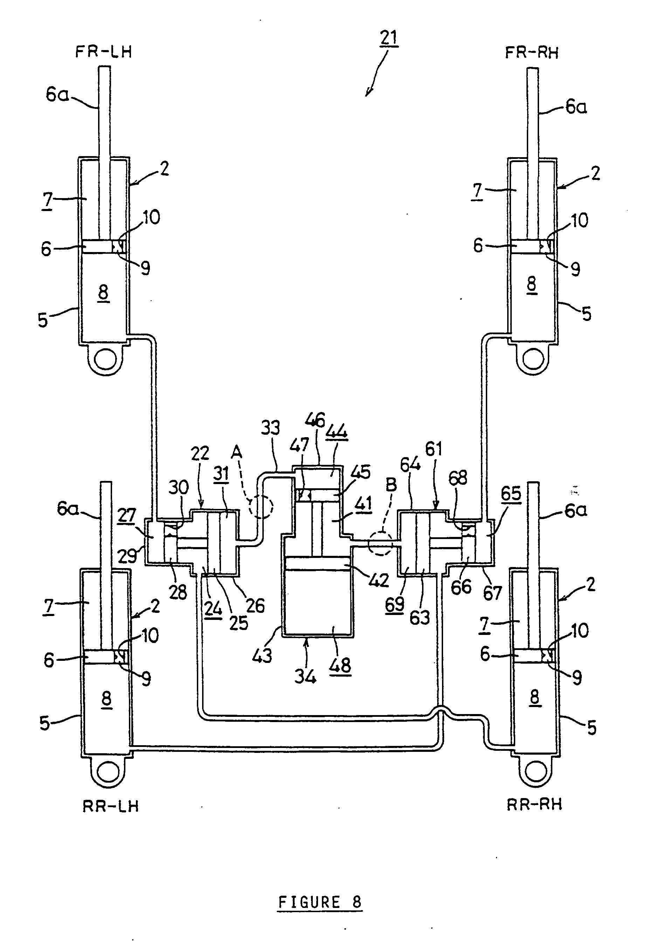

The four-wheeled vehicle suspension device or system according to the seventh embodiment may be constituted as shown in FIG. 8.

FIG. 8 shows the constitution of another embodiment of the four-wheeled vehicle suspension system. In the figure, components that are the same as or similar to those described in reference to FIGs. 1 to 7, 10 to 12 are provided with the same symbols and their detailed descriptions are omitted.

The four-wheeled vehicle suspension system 21 shown in FIG. 8 is constituted with the hydraulic cylinders 2 for the left front and right rear wheels interconnected through the first pressure regulator 22, and with the hydraulic cylinders 2 for the right front and left rear wheels interconnected through the second pressure regulator 61. A flow rate regulator 34 of the same constitution as in the second embodiment is interposed in the second communication passage 33 which interconnects the pressure regulating oil chamber 31 of the first pressure regulator 22 and the pressure regulating oil chamber 69 of the second pressure regulator 61.

When a vehicle provided with the four-wheeled vehicle suspension system 21 constituted as shown in FIG. 8 rolls, damping forces are produced as the working oil flows through the throttles 10 provided in the pistons 6 of the respective hydraulic cylinders 2, and through the throttles 30 and 68 provided in the first and second pressure regulators 22 and 61. When one of the four wheels, for example the left front wheel, enters a recess on the road while the vehicle is rolling and the hydraulic cylinder 2 for the left front wheel moves in the direction opposite that is expected when the vehicle rolls, the working oil flow rate through the throttle 30 in the first pressure regulator 22 decreases (the damping force decreases), the first and second movable walls 25 and 28 move, and the volume of the pressure regulating chamber 31 of the first pressure regulator 22 changes. On the other hand, in the second pressure regulator 61, the movable walls 63 and 66 are held immovable and the volume of the pressure regulating chamber 69 does not change. Therefore, the volumetric change in the hydraulic route with the movement of the movable walls 25 and 28 of the first pressure regulator 22 is offset with the volumetric change due to the movement of the movable walls 42 and 45 of the flow rate regulator 34. That is, a damping force is produced as the working oil flows through the throttle 47 of the flow rate regulator 34 between the third and fourth oil chambers 41 and 44.

Therefore, while the damping forces produced with the first and second pressure regulators 22 and 61 decrease when the vehicle negotiates an irregular road surface while the vehicle is rolling, a damping force is produced with the flow rate regulator 34. As a result, it is possible to stabilize the damping force for restricting the rolling.

When a vehicle provided with the four-wheeled vehicle suspension system 21 shown in FIG. 8 pitches, damping forces are produced with both the throttles 10 provided in the pistons of the respective hydraulic cylinders 2 and the throttles 30 and 68 of the first and second pressure regulators 22 and 61. When the vehicle bounces, the damping force is produced only with the throttles 10 provided in the pistons 6 of the respective hydraulic cylinders 2. During the bouncing, the pressure of high pressure gas in the flow rate regulator 34 works as a spring force. Moreover, since the first and second pressure regulators 22 and 61 can work independently, damping characteristics of the throttles 30 and 68 of the first and second pressure regulators 22 and 61 may be set individually.

When the front wheels and rear wheels move in the twisting directions as seen from the front, the working oil flows through the throttle 47 of the flow rate regulator 34 by the flow rate corresponding to the flow rate into or out of the two, diagonally located hydraulic cylinders 2. Therefore, the damping force can be increased in comparison with that during pitching or rolling. Therefore, the movement of the front and rear wheels in the twisting directions as seen from the front can be sufficiently restricted even if throttles having the same damping characteristic are used for the first and second pressure regulators 22 and 61, and for the flow rate regulator 34.

When this embodiment is employed, a throttle or throttles may be provided in either one or both of the positions indicated with the symbol A in FIG. 8, between the first pressure regulator 22 and the flow rate regulator 34, and with the symbol B between the flow rate regulator 34 and the second pressure regulator 61. Providing the throttle or throttles in this way can increase the damping force when the front and rear wheels move in the twisting directions as seen from the front.

Also when this embodiment is employed, the flow rate regulator may be replaced with the one shown in FIG. 3. Furthermore, the flow rate regulator 34 used here may be the one shown in FIGs. 1 or 5.

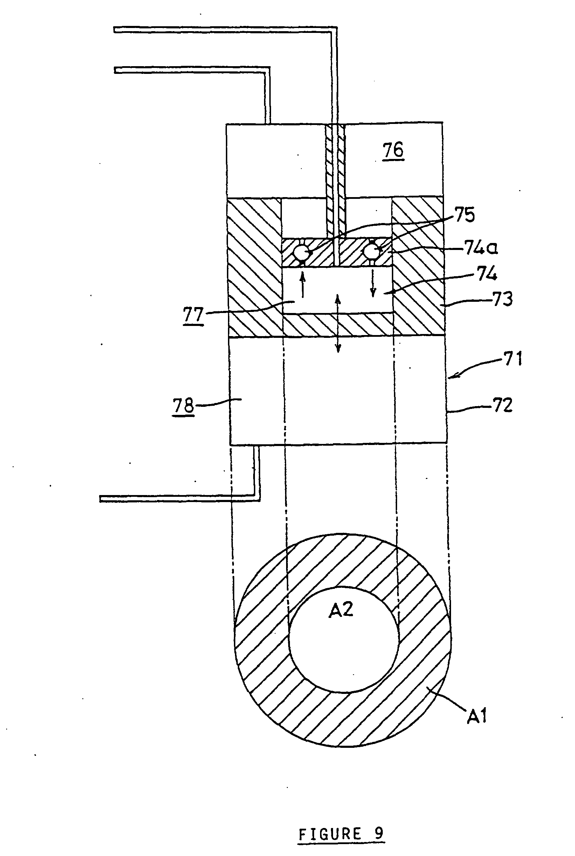

The pressure regulators 22 and 61 used in the above embodiments may be constituted as shown in FIG. 9 as another embodiment, and comprises a first pressure regulating cylinder 72 with a movable wall 73 inside of which is formed a second pressure regulating cylinder 74, with a throttle 75 formed in a wall 74a of the second pressure regulating cylinder 74. Even with this constitution, the same effect as with the above-described embodiments is provided. The symbol 76 denotes a first oil chamber, 77 a second oil chamber, and 78 a pressure regulating oil chamber. The symbol A1 represents the effective cross-sectional area of the first pressure regulating cylinder 72, and A2 that of the second pressure regulating cylinder 74.

The four hydraulic cylinders 2 may be constituted either with hydraulic dampers or may be formed separately from the hydraulic dampers and interposed between the wheels and the vehicle body. When the hydraulic cylinders 2 are constituted separately from the hydraulic dampers in this way, a simple through hole instead of the throttle 10 is bored in each piston 6.

According to an (first) embodiment mentioned above the four-wheeled vehicle suspension device comprises hydraulic cylinders 2, each provided for each wheel, with the piston 6 of each hydraulic cylinder 2 connected to one of vehicle body and wheel sides and with the cylinder body 5 of each hydraulic cylinder 2 connected to the other of the vehicle body and wheel sides, with the oil chambers 8 of the two hydraulic cylinders 2 located on the same front or rear side of the vehicle body interconnected through a pressure regulator 22, with the pressure regulator 22 comprising; a first pressure regulating cylinder 26 having a first oil chamber 24 connected to the oil chamber 8 of one hydraulic cylinder 2 and also having a first movable wall 22 for changing the volume of the first oil chamber 24, a second pressure regulating cylinder 29 having a second oil chamber 27 connected to the oil chamber 8 of the other hydraulic cylinder 2 and also having a second movable wall 28 for changing the volume of the second oil chamber 27 in interlocked motion with the first movable wall 25 so that the volumetric changes of the first and second oil chambers 24,27 are in mutual agreement, and a throttle 30 interposed between the hydraulic routes of the first and second oil chambers, and with the pressure regulator 22 provided with a pressure regulating oil chamber 31 the volume of which is changed by the movement of the first and second movable walls 25,28, with the pressure regulating oil chamber 31 connected to the oil chambers 8 of the other two hydraulic cylinders 2 and also connected to a flow rate regulating cylinder divided with the movable wall 37 into a high pressure gas chamber 38 and an oil chamber 36, and provided with a throttle for working oil to flow through by the movement of the movable walls of the flow rate regulating cylinder.

According to said (first) embodiment, when a hydraulic cylinder on a wheel side moves in a different direction from that expected during rolling, as the vehicle negotiates an irregular road surface while the vehicle is rolling, working oil flows into or out of a flow rate regulating cylinder through a throttle.

Therefore, since a damping force is produced as working oil flows through the throttle and the damping force for restricting the rolling is stabilized, a four-wheeled vehicle suspension system may be materialized with which the damping force during rolling of a vehicle is not affected with road surface irregularities.

With this (first) embodiment, a damping force is produced as working oil flows through the throttle of the pressure regulator when the vehicle body rolls. At this time, if one of the two hydraulic cylinders interconnected through the pressure regulator makes a movement different from the movement normally occurring during rolling, the movable wall of the pressure regulator moves to change the volume of the pressure regulating oil chamber of the pressure regulator. As a result, working oil flows into or out of the flow rate regulating cylinder through the throttle. On the other hand, when the other two hydraulic cylinders during rolling make a different movement from that normally occurring during rolling, with both of the hydraulic cylinders moving in the same direction, working oil flows into or out of the flow rate regulating cylinder through the throttle.

According to a further (second and third) embodiment mentioned above the four-wheeled vehicle suspension system comprises hydraulic cylinders 2, each provided for each wheel, with the oil chambers 8 of the two hydraulic cylinders 2 located on the same front or rear side of the vehicle body interconnected through a pressure regulator 22, with the pressure regulator 22 comprising; a first pressure regulating cylinder 26 having a first oil chamber 24 connected to the oil chamber 8 of one hydraulic cylinder 2 and also having a first movable wall 25 for changing the volume of the first oil chamber 24, a second pressure regulating cylinder 29 having a second oil chamber 27 connected to the oil chamber 8 of the other hydraulic cylinder 2 and also having a second movable wall 28 for changing the volume of the second oil chamber 29 in interlocked motion with the first movable wall 25 so that the volumetric changes of the first and second oil chambers 24,27 are in mutual agreement, and a throttle 30 interposed between the hydraulic routes of the first and second oil chambers 24,27, with the pressure regulator 22 provided with a pressure regulating oil chamber 31 the volume of which is changed by the movement of the first and second movable walls 25,28, with the pressure regulating oil chamber 31 connected to the oil chambers 8 of the other two hydraulic cylinders 2 through a flow rate regulating cylinder, and with the flow rate regulating cylinder constituted with, a third pressure regulating cylinder having a third movable wall 42 for changing the volume of the third oil chamber 41, a fourth pressure regulating cylinder having a fourth oil chamber 44 connected to the oil chambers 8 of the other two hydraulic cylinders 2 and also having a fourth movable wall 45 for changing the volume of the fourth oil chamber 44 in interlocked motion with the third movable wall 42 so that the volumetric changes of the third and fourth oil chambers 41,44 are in mutual agreement, a high pressure gas chamber 48 filled with a high pressure gas for urging the third and fourth movable walls 42,45 toward the oil chambers, and a throttle 47 interposed between the hydraulic routes of the third and fourth oil chambers 41,44.

When a vehicle body provided with said further (second and third) embodiment mentioned above rolls, a damping force is produced as working oil flows through a throttle in a pressure regulator. At this time, if one of two hydraulic cylinders interconnected through the pressure regulator makes a different movement than expected when the vehicle rolls, the movable wall in the pressure regulator moves, the volume in the pressure regulating oil chamber of the pressure regulator changes, and working oil flows into and out of the third oil chamber of the pressure regulator. At this time, since the working oil in the fourth oil chamber of the flow rate regulating cylinder does not move to or from the hydraulic route on the rear wheel side, the movable wall of the flow rate regulating cylinder moves as the working oil flows to or from the third oil chamber, and a damping force is produced as the working oil flows through the throttle of the flow rate regulating cylinder. Therefore, the decease in the damping force produced with the pressure regulator is offset with the damping force produced with the flow rate regulating cylinder.

Therefore, a four-wheeled vehicle suspension system may be materialized with which the damping force during rolling of a vehicle is not affected with road surface irregularities.

With said further (second and third) embodiment, a damping force is produced when a vehicle body rolls as working oil flows through the throttle of the pressure regulator. At this time, if one of the two hydraulic cylinders interconnected through the pressure regulator makes a movement different from the movement normally occurring during rolling, the movable wall of the pressure regulator moves to change the volume of the pressure regulating oil chamber of the pressure regulator, and working oil flows into or out of the third oil chamber of the flow rate regulating cylinder. At this time, since working oil does not move between the fourth oil chamber of the flow rate regulating cylinder and the hydraulic route on the rear wheel side, the movable wall in the flow rate regulator moves as working oil flows into or out of the third oil chamber, and a damping force is produced as working oil flows through the throttle of the flow rate regulating cylinder. As a result, the decrease in the damping force produced with the pressure regulator is offset with the damping force produced with the flow rate regulating cylinder.

According to another (fourth) embodiment mentioned above the four-wheeled vehicle suspension system comprising hydraulic cylinders 2 in two pairs for a vehicle body, with each cylinder allocated to each wheel, with one pair of hydraulic cylinders interconnected through a first pressure regulator 22, with the first pressure regulator 22 comprising; a first pressure regulating cylinder 26 having a first oil chamber 24 connected to the oil chamber 8 of one hydraulic cylinder 2 and also having a first movable wall 25 for changing the volume of the first oil chamber 24, a second pressure regulating cylinder 29 having a second oil chamber 27 connected to the oil chamber 8 of the other hydraulic cylinder 2 and also having a second movable wall 28 for changing the volume of the second oil chamber 29 in interlocked motion with the first movable wall 25 so that the volumetric changes of the first and second oil chambers 24,27 are in mutual agreement, and a throttle 30 interposed between the hydraulic routes of the first and second oil chambers, with the other pair of hydraulic cylinders 2 interconnected through a second pressure regulator 61, with the second pressure regulator 61 comprising; a third pressure regulating cylinder 64 having a third oil chamber 62 connected to the oil chamber 8 of one hydraulic cylinder 2 and also having a third movable wall 63 for changing the volume of the third oil chamber 62, a fourth pressure regulating cylinder 67 having a fourth oil chamber 65 connected to the oil chamber 8 of the other hydraulic cylinder 2 and also having a fourth movable wall 66 for changing the volume of the fourth oil chamber 65 in interlocked motion with the third movable wall 63 so that the volumetric changes of the third and fourth oil chambers 62,65 are in mutual agreement, and a throttle 68 interposed between the hydraulic routes of the third and fourth oil chambers 62,65, with the first and second pressure regulators 22,61 respectively provided with pressure regulating oil chambers 31,69, with the pressure regulating oil chambers 31,69 interconnected, and with their volumes changed by the movement of movable walls 25,28,63,66 of the pressure regulators 22,61, and with the hydraulic route 33 between the pressure regulating oil chambers 31,69 connected through a throttle to a flow rate regulating cylinder divided into a high pressure gas chamber 38 and an oil chamber 36 with a movable wall 37.

With said other (fourth) embodiment mentioned above, the first and second pressure regulators produce damping forces when two hydraulic cylinders for respective pressure regulators move in mutually different directions. Under the condition of the movable walls of the pressure regulators immovable, there is no working oil flow between the pressure regulating oil chambers of the two pressure regulators. However, when one of the four hydraulic cylinders moves in an opposite direction, the movable wall of the pressure regulator connected to the hydraulic cylinder moves, and working oil flows into or out of the pressure regulating oil chamber. At this time, since working oil does not flow into or out of the pressure regulating chamber of the other pressure regulator, a damping force is produced as working oil flows into or out of the flow rate regulating cylinder through the throttle. Therefore, the decrease in the damping force produced with the pressure regulator is offset with the damping force produced with the flow rate regulating cylinder. As a result, a four-wheeled vehicle suspension system can be materialized with which the damping force during rolling or pitching is not affected with irregular road surfaces.

Moreover with said other (fourth) embodiment, a damping force is produced when two hydraulic cylinders for each of the first and second pressure regulators move in mutually opposite directions. Working oil does not move between the pressure regulating oil chambers of the two pressure regulators under the condition of the movable walls of the pressure regulators remaining motionless. However, if any one of the hydraulic cylinders moves in an opposite direction, the movable wall of the pressure regulator connected to the hydraulic cylinder moves, and working oil flows into or out of the pressure regulating oil chamber. At this time, since working oil does not flow into or out of the pressure regulating oil chamber of the other pressure regulator, working oil flows into or out of the flow rate regulating cylinder through the throttle to produce a damping force. As a result, the decrease in the damping force produced with the pressure regulator is offset with the damping force produced with the flow rate regulating cylinder.

For example, with a constitution in which the two hydraulic cylinders for the front wheels are connected to the first pressure regulator and the two hydraulic cylinders for the rear wheels are connected to the second pressure regulator, when the vehicle rolls, damping forces are produced as working oil flows through the throttles of the first and second pressure regulators. At this time, if one of the hydraulic cylinders connected to the first pressure regulator makes a movement different from the movement normally occurring during rolling due to an irregular road surface, the working oil flow rate through the throttle of the first pressure regulator decreases and at the same time the movable wall of the first pressure regulator moves to change the volume of the pressure regulating oil chamber of the first pressure regulator. On the other hand, the movable wall of the second pressure regulator at this time is held immovable and the volume of the pressure regulating oil chamber does not change. Therefore, the volumetric change of the hydraulic route due to the movement of the movable wall of the first pressure regulator is offset with that due to the movement of the movable wall of the flow rate regulating cylinder. That is to say, a damping force is produced as working oil flows into or out through the throttle of the flow rate regulation cylinder. The above phenomenon also occurs even when the hydraulic cylinder that makes a different movement from the movement normally occurring during rolling is located on a different, front or rear side.

With another constitution in which the two hydraulic cylinders on the left side of the vehicle body are connected to the first pressure regulator and the two hydraulic cylinders on the right side of the vehicle body are connected to the second pressure regulator, the same phenomenon as described above occurs when the vehicle pitches. That is, the decrease in the damping force of the first or second pressure regulator at the time of pitching is offset with the damping force produced with the flow rate regulating cylinder.

With still another constitution in which the first pressure regulator is connected to the hydraulic cylinders for the left front and right rear wheels and the second pressure regulator is connected to the hydraulic cylinders for the right front and left rear wheels, the same phenomenon as described above occurs when the wheels as seen from the front move in the twisting direction of the vehicle body.

According to still another (fifth to seventh) embodiment mentioned above the four-wheeled vehicle suspension system comprising hydraulic cylinders 2 in two pairs for a vehicle body, with each cylinder allocated to each wheel, with one pair of hydraulic cylinders 2 interconnected through a first pressure regulator 22, with the first pressure regulator 22 comprising; a first pressure regulating cylinder 26 having a first oil chamber 24 connected to the oil chamber 8 of one hydraulic cylinder 2 and also having a first movable wall 25 for changing the volume of the first oil chamber 24, a second pressure regulating cylinder 29 having a second oil chamber 27 connected to the oil chamber 8 of the other hydraulic cylinder 2 and also having a second movable wall 28 for changing the volume of the second oil chamber 27 in interlocked motion with the first movable wall 25 so that the volumetric changes of the first and second oil chambers 24,27 are in mutual agreement, and a throttle 30 interposed between the hydraulic routes of the first and second oil chambers 24,27, with the other pair of hydraulic cylinders 2 interconnected through a second pressure regulator 61, with the second pressure regulator 61 comprising; a third pressure regulating cylinder 64 having a third oil chamber 62 connected to the oil chamber 8 of one hydraulic cylinder 2 and also having a third movable wall 63 for changing the volume of the third oil chamber 62, a fourth pressure regulating cylinder 67 having a fourth oil chamber 65 connected to the oil chamber 8 of the other hydraulic cylinder 2 and also having a fourth movable wall 66 for changing the volume of the fourth oil chamber 65 in interlocked motion with the third movable wall 63 so that the volumetric changes of the third and fourth oil chambers 62,65 are in mutual agreement, and a throttle 68 interposed between the hydraulic routes of the third and fourth oil chambers 62,65, with the first and second pressure regulators 22,61 respectively provided with pressure regulating oil chambers 31,69, with their volumes changed by the movement of movable walls 25,28,63,66 of the pressure regulators 22,61, and with the pressure regulating oil chambers 31,69 interconnected through a flow rate regulating cylinder, with the flow rate regulating cylinder comprising; a third pressure regulating cylinder 43 with a third movable wall 42 for changing a volume of the third oil chamber 41, a fourth pressure regulating cylinder 46 having a fourth oil chamber 44 connected to the second pair of hydraulic cylinders 2 and also having a fourth movable wall 45 for changing the volume of the fourth oil chamber 44 in interlocked motion with the third movable wall 42 so that volumetric changes of the third and fourth oil chambers 41,44 are in mutual agreement, a third movable wall 42 within the third pressure regulating cylinder 43 also defines a fifth oil chamber 49 which communicates through a throttle 52 with an oil chamber 51 of a fifth pressure regulating cylinder 50 provided with a fifth moveable wall 53 and high pressure gas chamber 54 filled with a high pressure gas for urging the third, fourth and fifth movable walls 42,45,53 toward the oil chambers, and a throttle 47 interposed between hydraulic routes of the third and fourth oil chambers 41,44.

According to said other (fifth to seventh) embodiment, when a constitution is employed in which the two hydraulic cylinders located on one of the front and rear sides of the vehicle body are connected to the first pressure regulator and the two hydraulic cylinders located on the other of the front and rear sides of the vehicle body are connected to the second pressure regulator, damping forces are produced when the vehicle body rolls as working oil flows through the throttles of the first and second pressure regulators. When any hydraulic cylinder makes a movement that is different from that normally occurring during rolling, the movable wall of the pressure regulator to which the hydraulic cylinder is connected moves. As a result, a differential pressure is produced between the fifth and sixth oil chambers of the flow rate regulating cylinder, and working oil flows through the throttle provided between the oil chambers. As working oil flows through the throttle, a damping force is produced to offset the decrease in the damping force on the pressure regulator side.

When a constitution is employed in which the two hydraulic cylinders on one of the right and left sides of the vehicle body are connected to the first pressure regulator and the two hydraulic cylinders on the other of the right and left sides of the vehicle body are connected to the second pressure regulator and the vehicle body rolls, both of the movable walls of the first and second pressure regulators move to produce a differential pressure between the third and fourth oil chambers of the flow rate regulating cylinder connected to the pressure regulating oil chambers of both of the pressure regulators. As a result, the damping force against rolling is produced as working oil flows through the throttle between the third and fourth oil chambers. When any hydraulic cylinder makes a movement that is different from that normally occurring during rolling, a damping force is produced as working oil flows through the throttle between the oil chambers of respective sets so as to offset the differential pressure between the first and second oil chambers of the first pressure regulator, and the differential pressure between the third and fourth oil chambers of the second pressure regulator.

When another constitution is employed in which the first pressure regulator is connected to the hydraulic cylinders for the left front and right rear wheels and the second pressure regulator is connected to the hydraulic cylinders for the right front and left rear wheels, the same phenomenon as described above occurs when the wheels as seen from the front move in the twisting direction of the vehicle body.

Regarding the embodiments mentioned above the four-wheeled vehicle suspension device comprises a hydraulic cylinder 2 for each wheel. Said hydraulic cylinders 2 are provided in two pairs, wherein at least a first pair of said hydraulic cylinders 2 is interconnected through a pressure regulator 22, and a second pair of hydraulic cylinders 2 is interconnected with each other and connected with said pressure regulator 22 by a communication passage means 23,33. A flow rate regulator 34 is provided between said pressure regulator 22 and said second pair of hydraulic cylinders 2.

Said pressure regulator 22 comprises: a first pressure regulating cylinder 26 having a first oil chamber 24 connected to one hydraulic cylinder 2 of the first pair and also having a first movable wall 25 for changing a volume of the first oil chamber 24; a second pressure regulating cylinder 29 having a second oil chamber 27 connected to the other hydraulic cylinder 2 of the first pair and also having a second movable wall 28 for changing the volume of the second oil chamber 27 in interlocked motion with the first movable wall 25, wherein volumetric changes of the first and second oil chambers 24,27 are in mutual agreement; a throttle 30 interposed between the first and second oil chambers 24,27.

Said pressure regulator 22 further comprises: a pressure regulating oil chamber 31 a volume of which is changeable by the movement of the first and second movable walls 25,28.

Said pressure regulating oil chamber 31 is connected to the hydraulic cylinders 2 of the second pair by said communication passage means 23,33. Said pressure regulating oil chamber 31 is connected to the flow rate regulator 34.

According to a preferred embodiment said flow rate regulator 34 comprises a flow rate regulating cylinder divided with the movable wall 37 into a high pressure gas chamber 38 and an oil chamber 36. A throttle 35 is provided between said oil chamber 36 and said communication passage means 23,33 for working oil to flow through by the movement of the movable walls of the flow rate regulating cylinder.

According to another preferred embodiment said flow rate regulator 34 comprises a flow rate regulating cylinder having a third pressure regulating cylinder 43 with a third movable wall 42 for changing a volume of the third oil chamber 41, a fourth pressure regulating cylinder 46 having a fourth oil chamber 44 connected to the second pair of hydraulic cylinders 2 and also having a fourth movable wall 45 for changing the volume of the fourth oil chamber 44 in interlocked motion with the third movable wall 42 so that volumetric changes of the third and fourth oil chambers 41,44 are in mutual agreement, a high pressure gas chamber 48 filled with a high pressure gas for urging the third and fourth movable walls 42,45 toward the oil chambers, and a throttle 47 interposed between hydraulic routes of the third and fourth oil chambers 41,44.

According to a further preferred embodiment said flow rate regulator 34 comprises a flow rate regulating cylinder having a third pressure regulating cylinder 43 with a third movable wall 42 for changing a volume of the third oil chamber 41, a fourth pressure regulating cylinder 46 having a fourth oil chamber 44 connected to the second pair of hydraulic cylinders 2 and also having a fourth movable wall 45 for changing the volume of the fourth oil chamber 44 in interlocked motion with the third movable wall 42 so that volumetric changes of the third and fourth oil chambers 41,44 are in mutual agreement, a third movable wall 42 within the third pressure regulating cylinder 43 also defines a fifth oil chamber 49 which communicates through a throttle 52 with an oil chamber 51 of a fifth pressure regulating cylinder 50 provided with a fifth moveable wall 53 and high pressure gas chamber 54 filled with a high pressure gas for urging the third, fourth and fifth movable walls 42,45,53 toward the oil chambers, and a throttle 47 interposed between hydraulic routes of the third and fourth oil chambers 41,44.

The second pair of hydraulic cylinders 2 is interconnected by a first communication passage 23 and a throttle 32 is provided between said first communication passage 23 and said flow rate regulator 34.

According to a preferred embodiment said pressure regulator connecting the first pair of hydraulic cylinders 2 is a first pressure regulator 22 and the second pair of hydraulic cylinders 2 is interconnected through a second pressure regulator 61.

Said second pressure regulator 61 comprises a third pressure regulating cylinder 64 having a third oil chamber 62 connected to one hydraulic cylinder 2 of the second pair and also having a third movable wall 63 for changing the volume of the third oil chamber 62, a fourth pressure regulating cylinder 67 having a fourth oil chamber 65 connected to the other hydraulic cylinder 2 of the second pair and also having a fourth movable wall 66 for changing the volume of the fourth oil chamber 65 in interlocked motion with the third movable wall 63 so that the volumetric changes of the third and fourth oil chambers 62,65 are in mutual agreement, and a throttle 68 interposed between the hydraulic routes of the third and fourth oil chambers 62,65.

The first and second pressure regulators 22,61 are respectively provided with pressure regulating oil chambers 31,69, with the pressure regulating oil chambers 31,69 interconnected, and with their volumes changed by the movement of movable walls 25,28,63,66 of the pressure regulators 22,61.

Preferably at least one throttle A,B is provided between the first and second pressure regulator 22,61.

According to a preferred embodiment the first pair of hydraulic cylinders 2 interconnected through a pressure regulator 22 are located on the same front or rear side of the vehicle body.

According to another preferred embodiment the first pair of hydraulic cylinders 2 interconnected through a pressure regulator 22 are located on the same left or right side of the vehicle body.

According to a further preferred embodiment the first pair of hydraulic cylinders 2 interconnected through a pressure regulator 22 are located on opposing sides regarding a front and rear side and left and right side of the vehicle body to constitute a cross connection of the hydraulic cylinders 2.

According to the embodiments each hydraulic cylinder 2 comprises a piston 6 connected to one of vehicle body and wheel sides and a cylinder body 5 connected to the other of the vehicle body and wheel sides, and each hydraulic cylinder 2 comprises an oil chamber 8, wherein said oil chambers 8 of the hydraulic cylinders 22 is connected with the respective pressure regulator or flow rate regulator.

## Claims

1. A four-wheeled vehicle suspension device comprising a hydraulic cylinder (2) for each wheel, said hydraulic cylinders (2) being provided in two pairs, wherein
at least a first pair of said hydraulic cylinders (2) is interconnected through a pressure regulator (22), and
a second pair of hydraulic cylinders (2) is interconnected with each other and connected with said pressure regulator (22) by a communication passage means (23,33), **characterized in that**
a flow rate regulator (34) is provided between said pressure regulator (22) and said second pair of hydraulic cylinders (2).

2. A four-wheeled vehicle suspension device according to claim 1, wherein said pressure regulator (22) comprises:
a first pressure regulating cylinder (26) having a first oil chamber (24) connected to one hydraulic cylinder (2) of the first pair and also having a first movable wall (25) for changing a volume of the first oil chamber (24);
a second pressure regulating cylinder (29) having a second oil chamber (27) connected to the other hydraulic cylinder (2) of the first pair and also having a second movable wall (28) for changing the volume of the second oil chamber (27) in interlocked motion with the first movable wall (25), wherein volumetric changes of the first and second oil chambers (24,27) are in mutual agreement;
a throttle (30) interposed between the first and second oil chambers (24,27).

3. A four-wheeled vehicle suspension device according to claim 2, wherein said pressure regulator (22) comprises:
a pressure regulating oil chamber (31) a volume of which is changeable by the movement of the first and second movable walls (25,28).

4. A four-wheeled vehicle suspension device according to claim 3, wherein said pressure regulating oil chamber (31) is connected to the hydraulic cylinders (2) of the second pair by said communication passage means (23,33).

5. A four-wheeled vehicle suspension device according to claim 3 or 4, wherein said pressure regulating oil chamber (31) is connected to the flow rate regulator (34).

6. A four-wheeled vehicle suspension device according to at least one of the claims 1 to 5, wherein said flow rate regulator (34) comprises a flow rate regulating cylinder divided with the movable wall (37) into a high pressure gas chamber (38) and an oil chamber (36), wherein a throttle (35) is provided between said oil chamber (36) and said communication passage means (23,33) for working oil to flow through by the movement of the movable walls of the flow rate regulating cylinder.

7. A four-wheeled vehicle suspension device according to at least one of the claims 1 to 5, wherein said flow rate regulator (34) comprises a flow rate regulating cylinder having a third pressure regulating cylinder (43) with a third movable wall (42) for changing a volume of the third oil chamber (41), a fourth pressure regulating cylinder (46) having a fourth oil chamber (44) connected to the second pair of hydraulic cylinders (2) and also having a fourth movable wall (45) for changing the volume of the fourth oil chamber (44) in interlocked motion with the third movable wall (42) so that volumetric changes of the third and fourth oil chambers (41,44) are in mutual agreement, a high pressure gas chamber (48) filled with a high pressure gas for urging the third and fourth movable walls (42,45) toward the oil chambers, and a throttle (47) interposed between hydraulic routes of the third and fourth oil chambers (41,44).

8. A four-wheeled vehicle suspension device according to at least one of the claims 1 to 5, wherein said flow rate regulator (34) comprises a flow rate regulating cylinder having a third pressure regulating cylinder (43) with a third movable wall (42) for changing a volume of the third oil chamber (41), a fourth pressure regulating cylinder (46) having a fourth oil chamber (44) connected to the second pair of hydraulic cylinders (2) and also having a fourth movable wall (45) for changing the volume of the fourth oil chamber (44) in interlocked motion with the third movable wall (42) so that volumetric changes of the third and fourth oil chambers (41,44) are in mutual agreement, a third movable wall (42) within the third pressure regulating cylinder (43) also defines a fifth oil chamber (49) which communicates through a throttle (52) with an oil chamber (51) of a fifth pressure regulating cylinder (50) provided with a fifth moveable wall (53) and high pressure gas chamber (54) filled with a high pressure gas for urging the third, fourth and fifth movable walls (42,45,53) toward the oil chambers, and a throttle (47) interposed between hydraulic routes of the third and fourth oil chambers (41,44).

9. A four-wheeled vehicle suspension device according to at least one of the claims 1 to 8, wherein the second pair of hydraulic cylinders (2) is interconnected by a first communication passage (23) and a throttle (32) is provided between said first communication passage (23) and said flow rate regulator (34).

10. A four-wheeled vehicle suspension device according to at least one of the claims 1 to 9, wherein said pressure regulator connecting the first pair of hydraulic cylinders (2) is a first pressure regulator (22) and the second pair of hydraulic cylinders (2) is interconnected through a second pressure regulator (61).

11. A four-wheeled vehicle suspension device according to claim 10, wherein said second pressure regulator (61) comprises a third pressure regulating cylinder (64) having a third oil chamber (62) connected to one hydraulic cylinder (2) of the second pair and also having a third movable wall (63) for changing the volume of the third oil chamber (62), a fourth pressure regulating cylinder (67) having a fourth oil chamber (65) connected to the other hydraulic cylinder (2) of the second pair and also having a fourth movable wall (66) for changing the volume of the fourth oil chamber (65) in interlocked motion with the third movable wall (63) so that the volumetric changes of the third and fourth oil chambers (62,65) are in mutual agreement, and a throttle (68) interposed between the hydraulic routes of the third and fourth oil chambers (62,65).

12. A four-wheeled vehicle suspension device according to claim 10 or 11, wherein the first and second pressure regulators (22,61) are respectively provided with pressure regulating oil chambers (31,69), with the pressure regulating oil chambers (31,69) interconnected, and with their volumes changed by the movement of movable walls (25,28,63,66) of the pressure regulators (22,61).

13. A four-wheeled vehicle suspension device according to at least one of the claims 10 to 12, wherein at least one throttle (A,B) is provided between the first and second pressure regulator (22,61).

14. A four-wheeled vehicle suspension device according to at least one of the claims 1 to 13, wherein the first pair of hydraulic cylinders (2) interconnected through a pressure regulator (22) are located on the same front or rear side of the vehicle body.

15. A four-wheeled vehicle suspension device according to at least one of the claims 1 to 13, wherein the first pair of hydraulic cylinders (2) interconnected through a pressure regulator (22) are located on the same left or right side of the vehicle body.

16. A four-wheeled vehicle suspension device according to at least one of the claims 1 to 13, wherein the first pair of hydraulic cylinders (2) interconnected through a pressure regulator (22) are located on opposing sides regarding a front and rear side and left and right side of the vehicle body to constitute a cross connection of the hydraulic cylinders (2).

17. A four-wheeled vehicle suspension device according to at least one of the claims 1 to 16, wherein each hydraulic cylinder (2) comprises a piston (6) connected to one of vehicle body and wheel sides and a cylinder body (5) connected to the other of the vehicle body and wheel sides, and each hydraulic cylinder (2) comprises an oil chamber (8), wherein said oil chambers (8) of the hydraulic cylinders (22) is connected with the respective pressure regulator or flow rate regulator.

## Patentansprüche

1. Aufhängungsvorrichtung für ein vierrädriges Fahrzeug, aufweisend eine Hydraulikzylinder (2) für jedes Rad, wobei die Hydraulikzylinder (2) in zwei Paaren vorgesehen ist,
wobei zumindest ein erstes Paar von Hydraulikzylindern (2) miteinander durch einen Druckregler (22) verbunden ist, und
ein zweites Paar von Hydraulikzylindern (2) miteinander und mit dem Druckregler (22) durch eine Verbindungskanaleinrichtung (23, 33) verbunden ist,
**dadurch gekennzeichnet, dass**
ein Strömungsratenregler (34) zwischen dem Druckregler (22) und dem zweiten Paar von Hydraulikzylindern (2) vorgesehen ist.

2. Aufhängungsvorrichtung für ein vierrädriges Fahrzeug nach Anspruch 1,
wobei der Druckregler (22) aufweist:
einen ersten Druckregelzylinder (26) mit einer ersten Ölkammer (24), verbunden mit einem Hydraulikzylinder (2) des ersten Paares und auch versehen mit einer ersten bewegbaren Wand (25) zum Verändern eines Volumens der ersten Ölkammer (24);
einen zweiten Druckregelzylinder (29) mit einer zweiten Ölkammer (27), verbunden mit dem anderen Hydraulikzylinder (2) des ersten Paares und auch versehen mit einer zweiten bewegbaren Wand (28) zum Verändern des Volumens der zweiten Ölkammer (27) in verriegelter Bewegung mit der ersten bewegbaren Wand (25), wobei die volumetrischen Veränderungen der ersten und der zweiten Ölkammer (24, 27) in gegenseitiger Übereinstimmung erfolgen;
eine Drossel (30), eingesetzt zwischen der ersten und zweiten Ölkammer (24, 27).

3. Aufhängungsvorrichtung für ein vierrädriges Fahrzeug nach Anspruch 2,
wobei der Druckregler (22) aufweist:
eine Druckregel- Ölkammer (31) eines Volumens, das durch die Bewegung der ersten und zweiten bewegbaren Wand (25, 28) veränderbar ist.

4. Aufhängungsvorrichtung für ein vierrädriges Fahrzeug nach Anspruch 3,
wobei die Druckregel- Ölkammer (31) mit den Hydraulikzylindern (2) des zweiten Paares durch die Verbindungskanaleinrichtung (23, 33) verbunden ist.

5. Aufhängungsvorrichtung für ein vierrädriges Fahrzeug nach Anspruch 3 oder 4,
wobei die Druckregel- Ölkammer (31) mit dem Strömungsratenregler (34) verbunden ist.

6. Aufhängungsvorrichtung für ein vierrädriges Fahrzeug nach zumindest einem der Ansprüche 1 bis 5, wobei der Strömungsratenregler (34) aufweist einen Strömungsraten- Regelzylinder, geteilt mit der bewegbaren Wand (37) in eine Hochdruckgaskammer (38) und eine Ölkammer (36), wobei eine Drossel zwischen der Ölkammer (36) und der Verbindungskanaleinrichtung (23, 33) vorgesehen ist, um das Öl zu veranlassen, durch die Bewegung der bewegbaren Wände des Strömungsraten- Regelzylinders hindurchzufließen.

7. Aufhängungsvorrichtung für ein vierrädriges Fahrzeug nach zumindest einem der Ansprüche 1 bis 5, wobei der Strömungsratenregler (34) aufweist einen Strömungsraten- Regelzylinder mit einem dritten Druckregelzylinder (43), versehen mit einer dritten bewegbaren Wand (42) zum Verändern eines Volumens der dritten Ölkammer (41), einen vierten Druckregelzylinder (46) mit einer vierten Ölkammer (44), verbunden mit dem zweiten Paar der Hydraulikzylinder (2) und auch versehen mit einer vierten bewegbaren Wand (45) zum Verändern des Volumens der vierten Ölkammer (44) in verriegelter Bewegung mit der dritten bewegbaren Wand (42), so dass volumetrische Veränderungen der dritten und vierten Ölkammern (41, 44) in gegenseitiger Übereinstimmung erfolgen, eine Hochdruckgaskammer (48), gefüllt mit einem Hochdruckgas, um die dritte und vierte bewegbare Wand (42, 45) in die Richtung der Ölkammern zu drücken, und eine Drossel (47), die zwischen den Hydraulikwegen der dritten und vierten Ölkammern (41, 44) eingesetzt ist.

8. Aufhängungsvorrichtung für ein vierrädriges Fahrzeug nach zumindest einem der Ansprüche 1 bis 5, wobei der Strömungsratenregler (34) aufweist einen Strömungsraten- Regelzylinder mit einem dritten Druckregelzylinder (43), versehen mit einer dritten bewegbaren Wand (42) zum Verändern eines Volumens der dritten Ölkammer (41), einen vierten Druckregelzylinder (46) mit einer vierten Ölkammer (44), verbunden mit dem zweiten Paar von Hydraulikzylindern (2) und auch mit einer vierten bewegbaren Wand (45) zum Verändern des Volumens der vierten Ölkammer (44) in verriegelter Bewegung mit der dritten bewegbaren Wand (42), so dass volumetrische Veränderungen der dritten und vierten Ölkammern (41, 44) in gegenseitiger Übereinstimmung erfolgen, wobei eine dritte bewegbare Wand (42) innerhalb des dritten Druckregelzylinders (43) auch eine fünfte Ölkammer (49) bildet, die durch eine Drossel (52) mit einer Ölkammer (51) eines fünften Druckregelzylinders (50) kommuniziert, versehen mit einer fünften bewegbaren Wand (53) und eine Hochdruckgaskammer (54), gefüllt mit einem Hochdruckgas zum Drücken der dritten, vierten und fünften bewegbaren Wand (42, 45, 53) in Richtung der Ölkammern, und eine Drossel (479, eingesetzt zwischen den Hydraulikwegen der dritten und vierten Ölkammer (41, 44).

9. Aufhängungsvorrichtung für ein vierrädriges Fahrzeug nach zumindest einem der Ansprüche 1 bis 8, wobei das zweite Paar von Hydraulikzylindern (2)miteinander durch einen ersten Verbindungskanal (23) verbunden ist und eine Drossel (32) zwischen dem ersten Verbindungskanal (23) und dem Strömungsratenregler (34) vorgesehen ist.

10. Aufhängungsvorrichtung für ein vierrädriges Fahrzeug nach zumindest einem der Ansprüche 1 bis 9, wobei der Druckregler, der das erste Paar von Hydraulikzylindern (2) verbindet, ein erster Druckregler (22) ist und das zweite Paar von Hydraulikzylindern (2) miteinander durch einen zweiten Druckregler (61) verbunden ist.

11. Aufhängungsvorrichtung für ein vierrädriges Fahrzeug nach Anspruch 10, wobei der zweite Druckregler (61) aufweist einen dritten Druckregelzylinder (64), versehen mit einer dritten Ölkammer (62), verbunden mit einem Hydraulikzylinder (2) des zweiten Paares und auch versehen mit einer dritten bewegbaren Wand (63) zum Verändern des Volumens der dritten Ölkammer (62), einen vierten Druckregelzylinder (67), versehen mit einer vierten Ölkammer (65), verbunden mit dem anderen Hydraulikzylinder (2) des zweiten Paares und auch versehen mit einer vierten bewegbaren Wand (66) zum Verändern des Volumens der vierten Ölkammer (65) in einer verriegelten Bewegung mit der dritten bewegbaren Wand (63), so dass die volumetrischen Veränderungen der dritten und vierten Ölkammern (62, 65) in gegenseitiger Übereinstimmung erfolgen, und eine Drossel (68), eingesetzt zwischen die Hydraulikwegen der dritten und vierten Ölkammern (62, 65).

12. Aufhängungsvorrichtung für ein vierrädriges Fahrzeug nach Anspruch 10 oder 11, wobei die ersten und zweiten Druckregler (22, 61) jeweils versehen sind mit Druckregel- Ölkammern (31, 69), die miteinander verbundenen sind, wobei sich deren Volumen durch die bewegbaren Wände (25, 28, 63, 66) der Druckregler (22, 61) verändert.

13. Aufhängungsvorrichtung für ein vierrädriges Fahrzeug nach zumindest einem der Ansprüche 10 bis 12, wobei zumindest ein Drosselventil (A, B) zwischen dem ersten und zweiten Druckregler (22, 61) vorgesehen ist.

14. Aufhängungsvorrichtung für ein vierrädriges Fahrzeug nach zumindest einem der Ansprüche 1 bis 13, wobei das erste Paar von Hydraulikzylindern (2) verbunden, miteinander durch einen Druckregler (22), auf derselben vorderen oder hinteren Seite der Fahrzeugkarosserie angeordnet ist.

15. Aufhängungsvorrichtung für ein vierrädriges Fahrzeug nach zumindest einem der Ansprüche 1 bis 13, wobei das erste Paar von Hydraulikzylindern (2), miteinander durch einen Druckregler (22) verbunden, auf derselben linken oder rechten Seite der Fahrzeugkarosserie angeordnet ist.

16. Aufhängungsvorrichtung für ein vierrädriges Fahrzeug nach zumindest einem der Ansprüche 1 bis 13, wobei das erste Paar von Hydraulikzylindern (2), das miteinander durch einen Druckregler (22) verbunden ist, auf gegenüberliegenden Seiten in Bezug auf eine vordere oder hintere Seite der Fahrzeugkarosserie angeordnet ist, um eine Querverbindung der Hydraulikzylinder (2) zu bilden.

17. Aufhängungsvorrichtung für ein vierrädriges Fahrzeug nach zumindest einem der Ansprüche 1 bis 16, wobei jeder Hydraulikzylinder (2) aufweist einen Kolben (6), verbunden mit einem von Fahrzeugkarosserie oder Radseiten und einen Zylinderkörper (5), verbunden mit dem anderen von Fahrzeugkarosserie oder Radseiten, und wobei jeder Hydraulikzylinder (2) aufweist eine Ölkammer (8), wobei die Ölkammern (8) der Hydraulikzylinder (2) mit dem jeweiligen Druckregler oder mit dem Strömungsratenregler verbunden sind.

## Revendications

1. Dispositif de suspension pour un véhicule à quatre roues comprenant un vérin hydraulique (2) pour chaque roue, lesdits vérins hydrauliques (2) étant prévus sous forme de deux paires, dans lequel au moins une première paire desdits vérins hydrauliques (2) est interconnectée par l'intermédiaire d'un régulateur de pression (22), et une seconde paire de vérins hydrauliques (2) est interconnectée et raccordée audit régulateur de pression (22) par des moyens formant passage de communication (23, 33), **caractérisé en ce qu'**un régulateur de débit (34) est prévu entre ledit régulateur de pression (22) et la seconde paire de vérins hydrauliques (2).

2. Dispositif de suspension selon la revendication 1, dans lequel ledit régulateur de pression (22) comprend :
un premier vérin de régulation de pression (26) comportant une première chambre à huile (24) raccordée à un vérin hydraulique (2) de la première paire et comportant également une première paroi mobile (25) pour faire varier un volume de la première chambre à huile (24) ;
un second vérin de régulation de pression (29) comportant une seconde chambre à huile (27) raccordée à l'autre vérin hydraulique (2) de la première paire et comportant également une seconde paroi mobile (28) pour faire varier le volume de la seconde chambre à huile (27) selon un mouvement réciproquement verrouillé avec la première paroi mobile (25), dans lequel les variations volumétriques des première et seconde chambres à huile (24, 27) s'accordent mutuellement ;
un dispositif d'étranglement (30) intercalé entre les première et seconde chambres à huile (24, 27).

3. Dispositif de suspension selon la revendication 2, dans lequel ledit régulateur de pression (22) comprend :
une chambre à huile de régulation de pression (31) dont un volume peut être modifié par le mouvement des première et seconde parois mobiles (25, 28).

4. Dispositif de suspension selon la revendication 3, dans lequel ladite chambre à huile de régulation de pression (31) est raccordée aux vérins hydrauliques (2) de la seconde paire par lesdits moyens formant passage de communication (23, 33).

5. Dispositif de suspension selon la revendication 3 ou 4, dans lequel ladite chambre à huile de régulation de pression (31) est raccordée au régulateur de débit (34).

6. Dispositif de suspension selon au moins l'une quelconque des revendications 1 à 5, dans lequel ledit régulateur de débit (34) comprend un vérin de régulation de débit divisé avec la paroi mobile (37) en une chambre de gaz à haute pression (38) et une chambre à huile (36), dans lequel un dispositif d'étranglement (35) est prévu entre ladite chambre à huile (36) et lesdits moyens formant passage de communication (23, 33) pour le passage de l'huile de travail grâce au mouvement des parois mobiles du vérin de régulation de débit.

7. Dispositif de suspension selon au moins l'une quelconque des revendications 1 à 5, dans lequel ledit régulateur de débit (34) comprend un vérin de régulation de débit comprenant un troisième vérin de régulation de pression (43) avec une troisième paroi mobile (42) pour faire varier un volume de la troisième chambre à huile (41) ; un quatrième vérin de régulation de pression (46) comportant une quatrième chambre à huile (44) raccordée à la seconde paire de vérins hydrauliques (2) et comportant également une quatrième paroi mobile (45) pour faire varier le volume de la quatrième chambre à huile (44) selon un mouvement réciproquement verrouillé avec la troisième paroi mobile (42), de sorte que les variations volumétriques des troisième et quatrième chambres à huile (41, 44) s'accordent mutuellement, une chambre de gaz à haute pression (48) remplie d'un gaz à haute pression pour pousser les troisième et quatrième parois mobiles (42, 45) vers les chambres à huile et un dispositif d'étranglement (47) intercalé entre les parcours hydrauliques des troisième et quatrième chambres à huile (41, 44).

8. Dispositif de suspension selon au moins l'une quelconque des revendications 1 à 5, dans lequel ledit régulateur de débit (34) comprend un vérin de régulation de débit comprenant un troisième vérin de régulation de pression (43) avec une troisième paroi mobile (42) pour faire varier un volume de la troisième chambre à huile (41) ; un quatrième vérin de régulation de pression (46) comportant une quatrième chambre à huile (44) raccordée à la seconde paire de vérins hydrauliques (2) et comportant également une quatrième paroi mobile (45) pour faire varier le volume de la quatrième chambre à huile (44) selon un mouvement réciproquement verrouillé avec la troisième paroi mobile (42), de sorte que les variations volumétriques des troisième et quatrième chambres à huile (41, 44) s'accordent mutuellement, une troisième paroi mobile (42) à l'intérieur du troisième vérin de régulation de pression (43) définit également une cinquième chambre à huile (49) qui communique, par l'intermédiaire d'un dispositif d'étranglement (52), avec une chambre à huile (51) d'un cinquième vérin de régulation de pression (50) muni d'une cinquième paroi mobile (53) et une chambre de gaz à haute pression (54) remplie d'un gaz à haute pression pour pousser les troisième, quatrième et cinquième parois mobiles (42, 45, 53) vers les chambres à huile et un dispositif d'étranglement (47) intercalé entre les parcours hydrauliques des troisième et quatrième chambres à huile (41, 44).

9. Dispositif de suspension selon au moins l'une quelconque des revendications 1 à 8, dans lequel la seconde paire de vérins hydrauliques (2) est interconnectée par un premier passage de communication (23) et un dispositif d'étranglement (32) est intercalé entre ledit premier passage de communication (23) et ledit régulateur de débit (34).

10. Dispositif de suspension selon au moins l'une quelconque des revendications 1 à 9, dans lequel ledit régulateur de pression raccordant la première paire de vérins hydrauliques (2) est un premier régulateur de pression (22) et la seconde paire de vérins hydrauliques (2) est interconnectée par un second régulateur de pression (61).

11. Dispositif de suspension selon la revendication 10, dans lequel ledit second régulateur de pression (61) comprend un troisième vérin de régulation de pression (64) comportant une troisième chambre à huile (62) raccordée à un vérin hydraulique (2) de la seconde paire et comportant également une troisième paroi mobile (63) pour faire varier le volume de la troisième chambre à huile (62), un quatrième vérin de régulation de pression (67) comportant une quatrième chambre à huile (65) raccordée à l'autre vérin hydraulique (2) de la seconde paire et comportant également une quatrième paroi mobile (66) pour faire varier le volume de la quatrième chambre à huile (65) selon un mouvement réciproquement verrouillé avec la troisième paroi mobile (63), de sorte que les variations volumétriques des troisième et quatrième chambres à huile (62, 65) s'accordent mutuellement, et un dispositif d'étranglement (68) intercalé entre les parcours hydrauliques des troisième et quatrième chambres à huile (62, 65).

12. Dispositif de suspension selon la revendication 10 ou 11, dans lequel les premier et second régulateurs de pression (22, 61) sont respectivement munis de chambres à huile de régulation de pression (31, 69), avec les chambres à huile de régulation de pression (31, 69) interconnectées et avec leurs volumes modifiés par le mouvement des parois mobiles (25, 28, 63, 66) des régulateurs de pression (22, 61).

13. Dispositif de suspension selon au moins l'une quelconque des revendications 10 à 12, dans lequel au moins un dispositif d'étranglement (A, B) est prévu entre le premier et le second régulateur de pression (22, 61).

14. Dispositif de suspension selon au moins l'une quelconque des revendications 1 à 13, dans lequel la première paire de vérins hydrauliques (2) interconnectés par un régulateur de pression (22) est placée sur le même côté avant ou arrière de la caisse du véhicule.

15. Dispositif de suspension selon au moins l'une quelconque des revendications 1 à 13, dans lequel la première paire de vérins hydrauliques (2) interconnectés par un régulateur de pression (22) est placée sur le même côté gauche ou droit de la caisse du véhicule.

16. Dispositif de suspension selon au moins l'une quelconque des revendications 1 à 13, dans lequel la première paire de vérins hydrauliques (2) interconnectés par un régulateur de pression (22) est placée sur des côtés opposés par rapport à un côté avant et un côté arrière et à un côté gauche et un côté droit de la caisse du véhicule pour former une connexion croisée des vérins hydrauliques (2).

17. Dispositif de suspension selon au moins l'une quelconque des revendications 1 à 16, dans lequel chaque vérin hydraulique (2) comprend un piston (6) raccordé à l'un des côtés de la caisse du véhicule et des roues et un corps de vérin (5) raccordé à l'autre des côtés de la caisse du véhicule et des roues et chaque vérin hydraulique (2) comprend une chambre à huile (8), dans lequel ladite chambre à huile (8) des vérins hydrauliques (22) est raccordée au régulateur de pression ou au régulateur de débit respectif.
